# EUROPÄISCHE PATENTSCHRIFT

(11) **EP 2 689 373 B1**
(45) Veröffentlichungstag und Bekanntmachung des Hinweises auf die Patenterteilung: **02.09.2015**
(21) Anmeldenummer: 12712937.7
(22) Anmeldetag: 20.03.2012
(51) Int. Cl.: G06F 21/55, G06F 21/77, G06K 19/073

(54) **DETEKTIEREN VON ANGRIFFEN AUF EINEN PORTABLEN DATENTRÄGER**
DETECTING ATTACKS ON A PORTABLE DATA CARRIER
DÉTECTION DES ATTAQUES FRAPPANT UN SUPPORT PORTATIF DE DONNÉES

(30) Priorität: 22.03.2011 DE 102011014665
(43) Veröffentlichungstag der Anmeldung: 29.01.2014
(73) Patentinhaber: Giesecke & Devrient GmbH, 81677 München (DE)
(72) Erfinder: ECKARDT, Stefan, 82291 Mammendorf (DE)
(86) Internationale Anmeldenummer: PCT/EP2012/001223
(87) Internationale Veröffentlichungsnummer: WO 2012/126611

(56) Entgegenhaltungen:
- US-A1- 2005 289 270
- US-A1- 2007 180 319
- US-A1- 2011 010 775
- ALEX HALDERMAN J ET AL: "Lest We Remember: Cold Boot Attacks on Encryption Keys", PROCEEDINGS OF THE USENIX SECURITY SYMPOSIUM,, Bd. 17th symp, 1. Januar 2008 (2008-01-01) , Seiten 45-60, XP007910951,

## Beschreibung

Die vorliegende Erfindung betrifft ein Verfahren in einem portablen Datenträger zum Detektieren von Angriffen auf den Datenträger sowie einen derartigen portablen Datenträger.

Es ist bekannt, portable Datenträger mit wichtigen Daten oder Funktionen, wie zum Beispiel Chipkarten, Mobilfunkkarten oder dergleichen, mit Fehlerzählern auszustatten, um bei gehäuft auftretenden Fehlerereignissen geeignete Schutzmaßnahmen für den Datenträger einzuleiten. Beispielsweise können Datenträger blockiert werden, wenn ein Nutzer eine zum Betrieb erforderliche Identifikationsnummer (PIN) mehrmals falsch angegeben hat.

Ebenso sind zur Abwehr von systematischen Manipulationsversuchen und Angriffen auf die Integrität eines Datenträgers Erkennungsmechanismen bekannt, die in dem Datenträger hervorgerufene Fehlerereignisse, wie zum Beispiel fehlerhafte Programmabläufe, Prüfsummenfehler oder dergleichen, mittels eines Fehlerzählers registrieren und abhängig von dessen Fehlerzählerstand geeignete Schutzmaßnahmen einleiten. So können z.B. bei einem Angriff mittels differentieller Fehleranalyse (DFA) hervorgerufene gezielte Störungen in dem Datenträger erkannt und registriert werden, mit denen wichtige Daten, wie z.B. kryptographische Schlüssel oder dergleichen, rekonstruiert werden sollen.

Aus US 2011/010775 A1 ist ein Verfahren zur Erkennung von Angriffen auf einen elektronischen Speicher offenbart, die auf dem Verursachen von Fehlern in dem Speicher beruhen. Dabei werden Angriffe dadurch erkannt, dass ihre Frequenz so häufig ist, dass ein Fehlerzähler, der automatisch sowohl im eingeschalteten als auch ausgeschalteten Zustand seinen Inhalt nach einer gewissen Zeitspanne vergisst, keine Zeit hat, seinen Inhalt zu vergessen, bevor er wieder hochgezählt wird.

In diesem Zusammenhang kann jedoch nicht zwischen echten Angriffsfehlerereignissen, die auf tatsächliche Angriffe und absichtliche Manipulationsversuche, z.B. im Rahmen eines DFA-Angriffs, zurückzuführen sind, und Zufallsfehlerereignissen unterschieden werden, die eher aus natürlichen und eher zufällig auftretenden Ursachen resultieren, wie z. B. aus Alterungsprozessen, Umgebungsstrahlung oder dergleichen.

Demzufolge ist es die Aufgabe der vorliegenden Erfindung, eine Möglichkeit zu schaffen, differenzierte Schutzmaßnahmen im Hinblick auf die Ursache von erkannten Fehlerereignissen einzuleiten.

Diese Aufgabe wird durch ein Verfahren und eine Vorrichtung mit den Merkmalen der unabhängigen Ansprüche gelöst. In davon abhängigen Ansprüchen sind vorteilhafte Ausgestaltungen und Weiterbildungen der Erfindung angegeben.

Ein Verfahren zum Detektieren und Behandeln von Angriffen auf einen portablen Datenträger umfasst die Schritte des Erkennens eines Fehlerereignisses in dem Datenträger, des Registrierens des erkannten Fehlerereignisses mittels eines Fehlerzählers und des Einleitens von Schutzmaßnahmen abhängig von dem Zählerstand des Fehlerzählers. Erfindungsgemäß wird ein auf diese Weise erkanntes Fehlerereignis jedoch nur dann als ein Angriffsfehlerereignis gewertet, wenn es auf einen absichtlichen, systematischen Manipulations- oder Angriffsversuch eines Dritten zurückzuführen ist. Ein solches Fehlerereignis wird durch einen als Angriffsfehlerzähler ausgestalteten Fehlerzähler registriert, wenn das betreffende Fehlerereignis zumindest ein zeitbasiertes Angriffsfehlerkriterium erfüllt.

Mit Hilfe des zumindest einen zeitbasierten Angriffsfehlerkriteriums wird zwischen Angriffsfehlerereignissen und Zufallsfehlerereignissen unterschieden, indem die besondere Eigenschaft von systematischen Angriffsversuchen berücksichtigt wird, dass innerhalb einer vergleichsweise kurzen Zeitspanne eine vergleichsweise große Anzahl von Angriffsfehlerereignissen in dem Datenträger hervorgerufen werden, um durch Analyse von Störungen im Betrieb und Verhalten des Datenträgers, z.B. im Rahmen eines DFA-Angriffs, interne Zustände und geheime Daten des Datenträgers auszuspähen bzw. zu rekonstruieren.

Derartige Angriffssituationen sind durch das erfindungsgemäße zumindest eine zeitbasierte Angriffsfehlerkriterium zuverlässig erkennbar, da die auf zeitlich eher unspezifische Umwelt- oder Alterungseinflüsse zurückzuführenden Zufallsfehlerereignisse das zumindest eine zeitbasierte Angriffsfehlerkriteriums in aller Regel nicht erfüllen. Falls das zumindest eine zeitbasierte Angriffsfehlerkriterium nicht erfüllt ist, kann also ein systematischer Angriff auf den Datenträger als Ursache für erkannte Fehlerereignisse ausgeschlossen werden und es ist von alterungsbedingten Fehlerereignissen oder störenden Umwelteinflüssen auszugehen, beispielsweise von einer erhöhten Strahlungsbelastung am Standort des Datenträgers.

Auf diese Weise ermöglicht die Erfindung eine kombinierte Angriffs- und Strahlungsdetektion in dem Datenträger mit jeweils genau auf die betreffende Situation abgestimmten, differenzierten Schutzmaßnahmen, da Angriffsfehlerereignisse und strahlungsbedingte Zufallsfehlerereignisse unterschieden werden können.

Ein derartiger portabler Datenträger, vorzugsweise ein kartenförmiger Datenträger, wie z.B. eine Chipkarte, Smart-Card, sichere digitale Speicherkarte, (U)SIM-Mobilfunkkarte, Multimediakarte oder dergleichen, umfasst neben einem nicht-flüchtigen Speicher, einen Prozessor und eine Fehlerbehandlungseinheit mit einem Fehlerzähler. Die Fehlerbehandlungseinheit ist eingerichtet, ein Fehlerereignis in dem Datenträger zu erkennen, dieses mittels des Fehlerzählers zu registrieren und geeignete Schutzmaßnahmen abhängig von dem Zählerstand des Fehlerzählers einzuleiten. Die Fehlerbehandlungseinheit kann hierbei als eigenständige und separate Hardware-Komponente des Datenträgers ausgestaltet sein, oder als Betriebssystem- oder Applikationsprogramm, das durch den Prozessor des Datenträgers als Fehlerbehandlungsprozess ausgeführt wird.

Erfindungsgemäß ist der Fehlerzähler ein Angriffsfehlerzähler. Die Fehlerbehandlungseinheit ist hierbei eingerichtet, bei einem erkannten Fehlerereignis eine Prüfung dahingehend vorzunehmen, ob das Fehlerereignis zumindest ein vorgegebenes zeitbasiertes Angriffsfehlerkriterium erfüllt, und dieses Fehlerereignis nur dann mittels des Angriffsfehlerzählers zu registrieren, wenn das zumindest eine zeitbasierte Angriffsfehlerkriterium erfüllt ist.

Vorzugsweise stuft die Fehlerbehandlungseinheit Fehlerereignisse gemäß eines zeitbasierten Angriffsfehlerkriteriums als Angriffsfehlerereignisse ein, wenn beim Auftreten bzw. Erkennen des Fehlerereignisses eine vorgegebene und von der Fehlerbehandlungseinheit überwachte Neustart-Zeitspanne unterschritten wird. Die vorgegebene Neustart-Zeitspanne gibt die maximale Zeitdauer zwischen dem letzten Neustarten (Reboot) des Datenträgers und einem vorhergehenden Rücksetzen (Reset) des Datenträgers aufgrund des Fehlerereignisses an (also die fehlerbedingte Ausfallzeit bzw. "Downtime" des Datenträgers), bei deren Unterschreiten das Fehlerereignis als Angriffsfehlerereignis gewertet wird. Wird die vorgegebene Neustart-Zeitspanne überschritten, so kann von einem nicht auf einen Angriff zurückzuführenden Fehlerereignis ausgegangen werden, z.B. von einem Zufallsfehlerereignis aufgrund einer erhöhten Umgebungsstrahlung.

Der Datenträger bzw. dessen Fehlerbehandlungseinheit reagiert auf ein (Angriffs-) Fehlerereignis in aller Regel mit einer temporären Blockade des Datenträgers, z.B. mittels einer Endlosschleife, die nur durch Rücksetzen und Neustarten des Datenträgers aufgelöst werden kann. Bei systematischen Angriffen von Außen, beispielsweise durch physikalische Beeinflussung des Datenträgers, wird der Datenträger nach dem Rücksetzen in der Regel schnell wieder neu gestartet, um möglichst viele Angriffsfehlerereignisse hervorzurufen. Die vorgegebene Neustart-Zeitspanne zwischen dem Rücksetzen und den Neustarten des Datenträgers durch einen Angreifer kann also relativ kurz bemessen werden, da der Angreifer den rückgesetzten Datenträger sofort neu starten wird, um das nächste Angriffsfehlerereignis möglichst schnell induzieren zu können. Wird von der Fehlerbehandlungseinheit festgestellt, dass die vorgegebene Neustart-Zeitspanne unterschritten wurde, so wird von einem Angriffsszenario ausgegangen. Ein manueller Neustart des Datenträgers durch einen berechtigten Nutzer, z.B. aufgrund eines Zufallsfehlerereignisses, wird von diesem zeitbasierten Angriffsfehlerkriterium jedoch nicht erfasst, da hierbei die Neustart-Zeitspanne in der Regel überschritten wird.

Ein Unterschreiten der vorgegebenen Neustart-Zeitspanne wird vorzugsweise dadurch festgestellt, dass unmittelbar vor dem fehlerbedingten temporären Blockieren des Datenträgers, z.B. mittels einer Endlosschleife, Fehlererkennungsdaten in einen flüchtigen Speicher des Datenträgers eingeschrieben werden und möglichst unmittelbar nach dem Neustarten des Datenträgers geprüft wird, ob die eingeschriebenen Fehlererkennungsdaten in dem flüchtigen Speicher noch zumindest teilweise vorhanden sind.

Sofern die Zeitspanne zwischen Rücksetzen und Neustarten des Datenträgers ausreichend kurz ist, so dass die Fehlererkennungsdaten in dem flüchtigen Speicher trotz des Ausfalls der Spannungsversorgung noch nicht vollständig gelöscht wurden, wird die vorgegebene Neustart-Zeitspanne unterschritten und von einem Angriffsfehlerereignis ausgegangen. Wenn die Zeitspanne jedoch länger als die vorgegebene Neustart-Zeitspanne ist, sind die Fehlererkennungsdaten in dem flüchtigen Speicher nicht mehr aufzufinden und das Fehlerereignis wird nicht als Angriffsfehlerereignis registriert. Die vorgegebene Neustart-Zeitspanne wird also durch die Eigenschaft des flüchtigen Speichers definiert, die darin gespeicherten Daten bei einer Unterbrechung der Spannungsversorgung noch eine gewisse Zeit im Speicher beizubehalten, bevor sie endgültig gelöscht werden.

Durch Einschreiben der Fehlererkennungsdaten in den flüchtigen Speicher - z.B. eines charakteristischen Bit- oder Bytemusters - bei Auftreten eines Fehlerereignisses oder unmittelbar vor dem fehlerbedingten Rücksetzen des Datenträgers kann bei einem Neustart zwischen einem sofortigen Neustart nach Rücksetzen des Datenträgers aufgrund eines (Angriffs-) Fehlerereignisses und einem sofortigen Neustart nach einem sonstigen Rücksetzen oder einem verzögerten Neustarten des Datenträgers unterschieden werden.

Ein weiteres, alternativ oder zusätzlich zu dem Unterschreiten der vorgegebenen Neustart-Zeitspanne einsetzbares zeitbasiertes Angriffsfehlerkriterium basiert auf dem Grundgedanken, dass ein Fehlerereignis mit hoher Wahrscheinlichkeit ein Angriffsfehlerereignis ist, wenn eine vorgegebene Fehler-Zeitspanne zwischen dem letzten Neustarten des Datenträgers und dem Auftreten bzw. Erkennen des betreffenden Fehlerereignisses unterschritten wird. In diesem Fall ist das Fehlerereignis so kurz nach dem Neustarten des Datenträgers aufgetreten, dass von einem absichtlichen, systematischen Angriffsversuch ausgegangen werden kann, bei dem eine Vielzahl von Angriffsfehlerereignissen in möglichst kurzen zeitlichen Abständen hervorgerufen werden soll.

Das Unterschreiten der vorgegebenen Fehler-Zeitspanne kann durch eine geeignete Zeitmessung festgestellt werden. Vorzugsweise wird die Prüfung der vorgegebenen Fehler-Zeitspanne jedoch indirekt durch einen Kommandozähler implementiert, der unmittelbar nach einem Neustarten des Datenträgers initialisiert wird und die danach auf dem Datenträger abgearbeiteten Kommandos, mitzählt. Der Zählerstand des Kommandozählers ist also ein repräsentatives Maß für die seit dem Neustarten vergangene Zeit, ausgedrückt in der Anzahl der seit dem Neustart abgearbeiteten Kommandos. Falls der Zählerstand des Kommandozählers bei Erkennen eines Fehlerereignisses unterhalb der vorgegebenen Maximalkommandoanzahl liegt, kann von einem Angriffsfehlerereignis ausgegangen werden, da die relativ kurz bemessene Fehler-Zeitspanne, ausgedrückt durch die Maximalkommandoanzahl, unterschritten wird.

Die Fehlerbehandlung bzw. die in Folge eines Fehlerereignisses einzuleitenden Schutzmaßnahmen können differenziert ausfallen, abhängig davon, ob es sich um ein Angriffsfehlerereignis oder ein Zufallsfehlerereignis handelt. Vorzugsweise wird ein Fehlerereignis durch eine Inkonsistenz im Programmablauf oder im sonstigen Verhalten des Datenträgers oder im Datenbestand eines Speichers des Datenträgers festgestellt, z.B. anhand eines Prüfsummenkriteriums oder einer sonstigen geeigneten, software- oder hardwaretechnisch realisierten Kontrollstruktur. Der Datenträger wird dann aufgrund eines derart erkannten Fehlerereignisses temporär blockiert, z.B. mittels einer Endlosschleife, bis er manuell rückgesetzt und neugestartet wird, um die Auswirkung des Fehlerereignisses, d.h. den fehlerhaften Programmablauf oder die fehlerhafte Prüfsumme, dadurch zu korrigieren. Falls der Fehler im laufenden Betrieb korrigierbar ist, z.B. aufgrund von ausreichender Redundanz in der Prüfsumme, ist ein temporäres Blockieren des Datenträgers mittels einer Endlosschleife prinzipiell nicht notwendig, kann aber zur Risikominimierung dennoch bevorzugt sein.

Bei einer hinreichend großen Zahl von auftretenden Angriffsfehlerereignissen, z.B. innerhalb einer vorgegebenen Zeitspanne, wird der Datenträger zum Schutz der Datenintegrität vorzugsweise dauerhaft blockiert, gesperrt oder anderweitig derart betriebsunfähig gemacht, dass er nicht mehr genutzt oder Gegenstand eines Angriffs werden kann. Das Angriffsrisiko wir dadurch minimiert, da ganz offensichtlich ein systematischer Angriff vorliegt. Demgegenüber kann die Fehlerbehandlungseinheit bei einer hinreichend großen Anzahl von z.B. innerhalb einer vorgegebenen Zeitspanne auftretenden Zufallsfehlerereignissen, einen Warnhinweis an den Nutzer des Datenträgers senden, damit dieser über das Strahlungsrisiko des Datenträgers informiert wird und es z.B. durch einen Ortswechsel verringern kann. In diesem Fall wirkt die Fehlerbehandlungseinheit als Strahlungsdetektor, der den Nutzer bei hinreichender Strahlenbelastung alarmiert.

Ein als Angriffsfehlerereignis erkanntes Fehlerereignis, z.B. aufgrund eines Unterschreitens der Neustart-Zeitspanne und/oder eines Unterschreitens der Fehler-Zeitspanne, wird zunächst mittels eines Angriffsfehlerzählers registriert. Bei Erreichen einer vorgegebenen Maximalangriffsfehleranzahl wird der Datenträger dann vorzugsweise dauerhaft blockiert oder anderweitig betriebsunfähig gemacht. Hierbei kann der Angriffsfehlerzähler nur bei Unterschreiten der Neustart-Zeitspanne, nur bei Unterschreiten der Fehler-Zeitspanne oder bei Unterschreiten der Neustart-Zeitspanne und der Fehler-Zeitspanne inkrementiert werden. Zusätzlich oder alternativ kann bei der Registrierung von Angriffsfehlerereignissen durch den Angriffsfehlerzähler berücksichtigt werden, wenn bei einer vorgegebenen Anzahl von aufeinander folgenden Neustarts ein Unterschreiten der Neustart-Zeitspanne und/ oder der Fehler-Zeitspanne festgestellt wird. Auch hierbei ist mit hoher Wahrscheinlichkeit von einem systematischen Angriff auszugehen, da dem Datenträger nach Rücksetzen und Neustarten immer wieder ein Angriffsfehlerereignis induziert wird.

Bei einer bevorzugten Ausführungsvariante werden die beiden beschriebenen zeitbasierten Angriffsfehlerkriterien, nämlich das Unterschreiten der vorgegebenen Neustart-Zeitspanne und das Unterschreiten der vorgegebenen Fehler-Zeitspanne, kombiniert. Beispielsweise kann der Angriffsfehlerzähler inkrementiert werden, wenn unmittelbar nacheinander ein Unterschreiten der vorgegebenen Neustart-Zeitspanne und anschließend der vorgegebenen Fehler-Zeitspanne (also ein schneller Fehler nach einem schnellen Neustart) festgestellt wird, oder wenn unmittelbar nacheinander ein Unterschreiten der vorgegebenen Fehler-Zeitspanne und anschließend der vorgegebenen Neustart-Zeitspanne (also ein schneller Neustart nach einem schnellen Fahler) festgestellt wird.

Bei einer vorteilhaften Ausgestaltung dieser Ausführungsvariante werden bei Unterschreiten der Fehler-Zeitspanne (also bei einem schnellen Fehler nach einem Neustart) Fehlererkennungsdaten in den flüchtigen Speicher des Datenträgers eingeschrieben und der Datenträger mittels einer Endlosschleife temporär blockiert. Zusätzlich wird das Auftreten eines Fehlerereignisses, welches die Fehler-Zeitspanne unterschritten hat, in dem nicht-flüchtigen Speicher notiert, beispielsweise durch ein Flag, durch eine geeignet initialisierte Variable im nicht-flüchtigen Speicher oder durch die Fehlererkennungsdaten im flüchtigen Speicher. Sofern nach dem Rücksetzen und Neustarten des Datenträgers die Fehlererkennungsdaten in dem flüchtigen Speicher zumindest teilweise erkannt werden können, d.h. ein Unterschreiten der Neustart-Zeitspanne (also ein schneller Neustart nach einem Fehler) festgestellt wird, wird anhand des Flags, der Variablen im nicht-flüchtigen Speicher oder den erkannten Fehlererkennungsdaten geprüft, ob das vorhergehende Rücksetzen des Datenträgers auf ein Unterschreiten der Fehler-Zeitspanne zurückzuführen ist. Falls dies der Fall ist, wird der Angriffsfehlerzähler inkrementiert, da vor dem Rücksetzen des Datenträgers ein Unterschreiten der Fehler-Zeitspanne registriert und nach dem Neustarten ein Unterschreiten der Neustart-Zeitspanne registriert wurde, insgesamt also ein schneller Neustart nach einem schnellen Fehler festgestellt wurde.

Bei einer weiteren vorteilhaften Ausgestaltung dieser Ausführungsvariante werden die beiden Angriffsfehlerkriterien in umgekehrter Reihenfolge kombiniert, das heißt, der Angriffsfehlerzähler wird inkrementiert, wenn vor dem Rücksetzen des Datenträgers ein Unterschreiten der Neustart-Zeitspanne und nach dem Neustarten ein Unterschreiten der Fehler-Zeitspanne registriert wurde, insgesamt also ein schneller Fehler nach einem schnellen Neustart festgestellt wurde.

Sofern das zumindest eine zeitbasierte Angriffsfehlerkriterium nicht erfüllt ist, wird das betreffende Fehlerereignis nicht als Angriffsfehler registriert, sondern kann anderweitig durch die Fehlerbehandlungseinheit des Datenträgres behandelt werden. Vorzugsweise wird ein solches Fehlerereignis als Zufallsfehlerereignis gewertet, dessen Ursache eben kein systematischer Angriff auf den Datenträger ist, sondern ein eher unwillkürlicher, gemäß einer bestimmten Zufallsverteilung auftretender Zufallsprozess, bei dem Fehlerereignisse gerade nicht innerhalb der vergleichsweise kurzen Neustart-Zeitspanne und/ oder Fehler-Zeitspanne auftreten.

Sofern sich solche Zufallsfehlerereignisse jedoch derart zeitlich und/ oder örtlich häufen, dass weitgehend reproduzierbare Auftrittsmuster und -wahrscheinlichkeiten feststellbar sind, kann von einer konkreten Belastungsquelle ausgegangen werden, z.B. eine unnatürlich hohe Strahlungsbelastung in der lokalen Umgebung, welche Fehlerereignisse in dem Datenträger hervorruft, welche gegebenenfalls sogar physikalische Speicherdefekte zur Folge haben können.

Ergänzend zu den nicht erfüllten Angriffsfehlerkriterien können weitere Kriterien herangezogen werden, z.B. prüfsummenbasierte Zufallsfehlerkriterien, mit denen Datenfehler in bestimmten Bereichen des nicht-flüchtigen Speichers durch eine Prüfsummenüberwachung festgestellt werden. Hierbei kann zumindest ein prüfsummenbasiertes Zufallsfehlerkriterien strahlungsbedingte, dauerhafte Speicherdefekte berücksichtigen, die weder im laufenden Betrieb korrigiert noch durch Rücksetzen und Neustarten kompensiert werden können.

Vorzugsweise prüft die Fehlerbehandlungseinheit nach Erkennen eines Zufallsfehlerereignisses, ob der erkannte Datenfehler korrigiert werden kann, z.B. aufgrund einer vor dem Auftreten des Datenfehlers ermittelten, zur Fehlerkorrektur geeigneten Prüfsumme oder aufgrund von Datenredundanz, Sicherheitskopien oder dergleichen. In diesem Fall kann der Datenfehler korrigiert werden und der Datenträger kann unbeeinträchtigt weiterlaufen.

Falls der Datenfehler zwar prinzipiell korrigierbar ist, jedoch nicht im laufenden Betrieb, beispielsweise weil die Information der betreffenden Prüfsumme nicht zur Korrektur ausreicht, kann die Fehlerbehandlungseinheit den Datenträger mit einer Endlosschleife bis zum Rücksetzen und Neustarten temporär blockieren. Bei dem Neustarten wird der Speicher initialisiert und dadurch der Datenfehler kompensiert. Vorzugsweise wird der Datenträger aus Sicherheitsgründen selbst dann temporär blockiert, wenn der Datenfehler im laufenden Betrieb korrigiert werden kann.

Falls ein physikalischer Speicherdefekt vorliegt, ist der Datenträger zunächst nicht ohne Weiteres korrigierbar. Hier gibt es die Variante, dass die Fehlerbehandlungseinheit den oder die betroffenen Datenblöcke in dem nicht-flüchtigen Speicher in einen nicht betroffenen Ersatzspeicherbereich umlagert und der Datenfehler dort wie oben erläutert korrigiert wird. Das Betriebssystem des Datenträgers bzw. dessen Speicherverwaltung greift dann zukünftig ersatzweise auf den Ersatzspeicherbereich zu.

Bei einer weiteren Variante kann der Speicherdefekt so schwerwiegend oder umfangreich sein, dass auch die Auslagerung der betroffenen Speicherblöcke nicht mehr hilft. Dies kann z.B. dann der Fall sein, wenn Speicherbereiche mit essentiellen Daten betroffen sind, z.B. Teile des Betriebssystems oder dergleichen. In diesem Fall kann die Fehlerbehandlungseinheit weiterführende Fehlerbehandlungsmechanismen einleiten, z.B. eine dauerhafte Blockierung des Datenträgers. Zusätzlich kann der Nutzer entsprechend benachrichtigt werden und/ oder eine umfassende Speichersicherung durchgeführt werden und/ oder in einen eingeschränkten Notbetrieb umgeschaltet werden. Da der Datenträger jedoch defekt ist, muss der Nutzer diesen umtauschen.

Derartige Datenfehler und/ oder Speicherdefekte werden von der Fehlerbehandlungseinheit vorzugsweise als Zufallsfehlerereignisse geeignet registriert, um mittels einer anschließenden Auswertung zeitliche oder örtliche Häufungen feststellen zu können, die auf eine hohe Strahlungsbelastung am Einsatzort oder zur Einsatzzeit des Datenträgers schließen lassen. Die Fehlerbehandlungseinheit wirkt dann als Strahlungsdetektor. Dies kann im einfachsten Fall mittels eines geeignet initialisierten Zufallsfehlerzählers realisiert werden, wobei eine Strahlungswarnung an den Nutzer ausgegeben wird, beispielsweise über eine Anzeigeeinrichtung des Datenträgers oder eines mit dem Datenträger verbundenen Endgeräts, wie zum Beispiel eines Mobilfunkendgeräts.

Eine solche Strahlungswarnung wird vorzugsweise dann ausgegeben, wenn die Anzahl der erkannten Zufallsfehlerereignisse innerhalb einer vorgegebenen Zeitspanne zugenommen hat und/oder eine Maximalzufallsfehleranzahl erreicht wurde. Ebenso kann die Fehlerbehandlungseinheit eine Strahlungswarnung ausgeben, wenn an bestimmten Auftrittsorten und/ oder zu bestimmten Auftrittszeiten eine Maximalzufallsfehlerzahl erreicht wurde.

Für die aus den Zufallsfehlerereignissen resultierenden Datenfehler oder Speicherdefekte stellt die Fehlerbehandlungseinheit vorzugsweise Fehlerstatusinformationen zusammen und legt diese in einem Statusspeicherbereich für das anschließende Feststellen von zeitlichen oder örtlichen Häufungen ab. Die Fehlerstatusinformationen umfassen hierbei zumindest die Speicheradresse des Datenfehlers oder Speichedefekts, vorzugsweise jedoch auch Zeitangaben oder Ortsangaben, die der Datenträger z.B. von einem Telekommunikationsendgerät erhalten kann, mit welchem er verbunden ist.

Vorzugsweise werden die oben beschriebenen Vorgänge, nämlich die Behandlung von aufgetretenen Datenfehlern und/oder Speicherdefekten sowie das Hinterlegen von Fehlerstatusinformationen, möglichst unmittelbar nach Auftreten des betreffenden Zufallsfehlerereignisses ausgeführt. Die Auswertung der Fehlerstatusinformationen kann die Fehlerbehandlungseinheit dann nach einem etwaigen Neustarten des Datenträgers in Folge einer zufallsfehlerbedingten Endlosschleife vornehmen. Falls ein Datenfehler im laufenden Betrieb korrigiert wird, kann die Auswertung der Fehlerstatusinformationen demgegenüber unmittelbar nach der Korrektur stattfinden.

Bei der Auswertung nach Neustarten des Datenträgers infolge einer zufallsfehlerbedingten Endlosschleife kann anhand der Fehlerstatusinformationen zum Beispiel auch ausgewertet werden, ob eine vorgegebene Anzahl von aufeinanderfolgendem Rücksetzen und Neustarten des Datenträgers aufgrund von Zufallsfehlerereignissen stattgefunden hat. Dies ist möglich, da die Fehlerstatusinformationen bei Erkennen eines Zufallsfehlerereignisses (vor der Endlosschleife) in dem Statusspeicherbereich abgelegt werden, von wo sie nach dem Neustarten ausgelesen und ausgewertet werden können.

In diesem Zusammenhang ist es auch möglich, dass nicht alle Datenfehler durch einen Eintrag im Statusspeicherbereich registriert werden, sondern nur diejenigen Zufallsfehlerereignisse, die zu einem Speicherdefekt geführt haben. Auch ist es möglich, die Fehlerstatusinformationen dahingehend zu ergänzen, ob ein Datenfehler oder ein (korrigierbarer oder nicht korrigierbarer) Speicherdefekt vorliegt. Dann kann beim Auswerten auch festgestellt werden, ob der Datenträger zuvor aufgrund eines durch Auslagern in einen Ersatzspeicherbereich korrigierten oder eines nicht korrigierbaren Speicherdefekts mittels einer Endlosschleife temporär blockiert und rückgesetzt wurde.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Fig. 1: einen erfindungsgemäßen Datenträger;
- Fig. 2: eine erste bevorzugte Ausführungsform der Erfindung;
- Fig. 3: eine zweite bevorzugte Ausführungsform der Erfindung;
- Fig. 4a: eine vorteilhafte Kombination der ersten und zweiten Ausführungsform der Erfindung;
- Fig. 4b: eine Variante des kombinierten Verfahrens gemäß Fig. 4a;
- Fig. 5a: eine erweiterte Variante der Ausführungsform gemäß Fig. 2; und
- Fig. 5b: eine erweiterte Variante der Ausführungsform gemäß Fig. 4a.

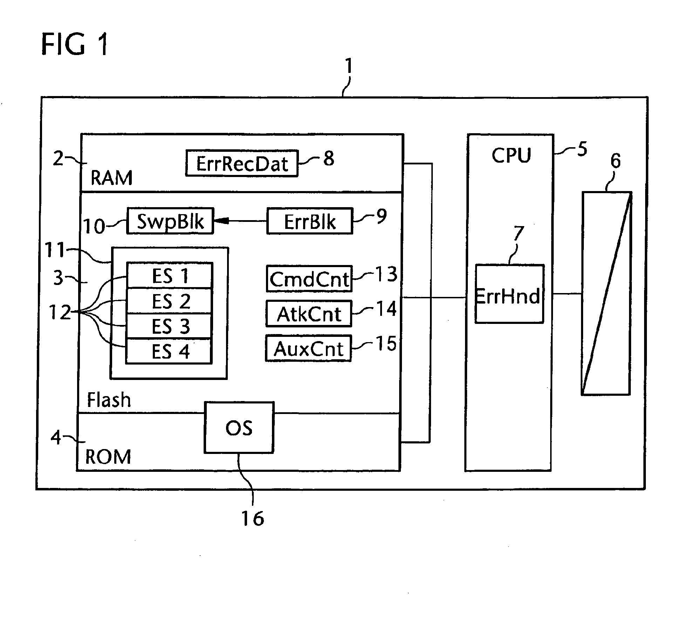

Fig. 1 illustriert einen portablen Datenträger, beispielsweise eine Chipkarte 1, Smartcard, (U)SIM-Mobilfunkkarte, sichere Multimediakarte, sichere digitale Speicherkarte oder dergleichen, mit den für die vorliegende Erfindung relevanten Komponenten. Die Chipkarte 1 umfasst insbesondere einen Prozessor 5 (CPU) und eine Datenkommunikationsschnittstelle 6, z.B. eine USB-Schnittstelle, zur elektrischen Verbindung und Datenkommunikation mit einem Telekommunikationsendgerät (nicht dargestellt), zum Beispiel mit einem portablen Computer, PDA, Mobilfunkendgerät oder dergleichen. Ferner umfasst die Chipkarte 1 eine Speicheranordnung 2, 3, 4 mit einem flüchtigen RAM-Arbeitsspeicher 2, einem nicht-flüchtigen Flash- oder EEPROM-Speicher 3 sowie einem ROM-Permanentspeicher 4.

Ein Betriebssystem 16 (OS), welches die Grundfunktionen des Datenträgers 1 bereitstellt, beispielsweise die Speicherverwaltung des RAM-Speichers 2 und des Flash-Speichers 3, ist im ROM-Speicher 4 abgelegt. Teile des Betriebssystems 16 können aber auch im Flash-Speicher 3 abgelegt sein, beispielsweise individuelle Betriebssystemmodule oder im laufenden Betrieb des Datenträgers 1 veränderliche Betriebssystemdaten.

In dem nicht-flüchtigen Flash-Speicher 3 ist insbesondere eine Fehlerbehandlungseinheit in Form eines Betriebssystemmoduls oder eines Applikationsprogramms abgelegt, welches von dem Prozessor 5 in Form eines Fehlerbehandlungsprozesses einer Fehlerbehandlungsapplikation 7 (ErrHndl) ausgeführt werden kann. Alternativ kann die Fehlerbehandlungseinheit auch als Teil des Betriebssystems 16 im ROM-Speicher 4 abgelegt sein.

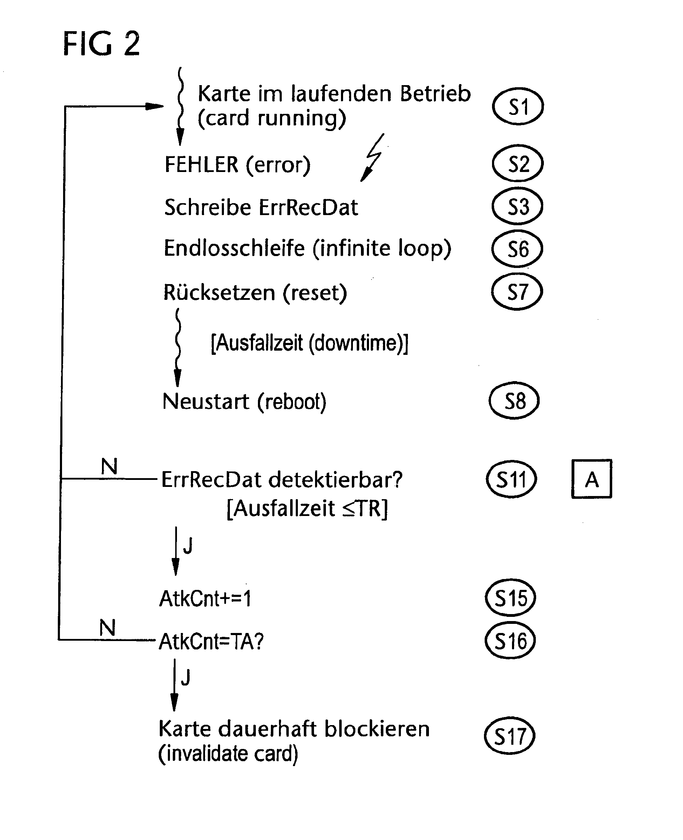

Die Figuren 2 bis 5 illustrieren bevorzugte Ausführungsformen und Ausführungsvarianten eines Fehlererkennungs- und -behandlungsverfahrens, welches durch die Fehlerbehandlungsapplikation 7 bzw. durch den entsprechenden Fehlerbehandlungsprozess durchgeführt wird. Die in den Figuren gleich benannten Schritte, z.B. der ordnungsgemäße laufende Betrieb der Chipkarte 1 in Schritt S1 ("card running") oder die Endlosschleife in Schritt S6 ("infinite loop") entsprechen einander in allen Verfahrensfiguren. Dennoch repräsentiert jede einzelne der Figuren 2 bis 5 ein vollständiges und eigenständig ausführbares Verfahren zur Fehlererkennung bzw. Fehlerbehandlung.

Zur Fehlererkennung und -behandlung legt die Fehlerbehandlungsapplikation 7 verschiedene Datensätze 8 bis 15 im RAM-Speicher 2 oder Flash-Speicher 3 ab und greift zum Zwecke der Erkennung und Behandlung von Fehlerereignissen in dem portablen Datenträger 1 selektiv auf diese zu. Die weitere Funktion der Fehlererkennungsdaten 8 (ErrRecDat) im RAM-Speicher 2, sowie des Kommandozählers 13 (CmdCnt), des Angriffsfehlerzählers 14 (AtkCnt), des Hilfsfehlerzählers 15 (AuxCnt) sowie der Fehlerstatusdaten 12 (ES1, ES2, ES3, ES4) in dem Statusspeicherbereich 11 im Flash-Speicher 3 sowie des fehlerhaften Speicherblocks 9 (ErrBlk) und des Ersatzspeicherblocks 10 (SwpBlk) werden nachfolgend im Zusammenhang mit den Figuren erläutert.

Die Fehlerbehandlungsapplikation 7 kann mit Hilfe von zeitbasierten Angriffsfehlerkriterien (verwirklicht durch die Abfragen A und B in den Figuren 2, 3 und 4a) zwischen Angriffsfehlerereignissen und Zufallsfehlerereignissen unterscheiden und diese dann differenziert behandeln. Grundlage dieser Unterscheidung zwischen Angriffs- und Zufallsfehlerereignissen mittels zeitbasierten Kriterien A und B sind die verschiedenen Ursachen von Fehlerereignissen, nämlich einerseits echte systematische bzw. willentliche Angriffe oder Angriffsversuche auf die Chipkarte 1 bzw. deren Chip oder Mikrocontroller und andererseits normale Alterungserscheinungen bzw. schädliche Umwelteinflüsse, wie zum Beispiel lokal erhöhte Strahlungsbelastungen, welche in der Chipkarte 1 nicht reproduzierbare Fehlerereignisse zufällig hervorrufen können.

Bei einem systematischen Angriff auf die Chipkarte 1 ist davon auszugehen, dass eine Vielzahl von Fehlerereignissen absichtlich und kurzzeitig hintereinander hervorgerufen werden, in der Regel lediglich unterbrochen durch eine temporäre Blockierung der Chipkarte 1 mittels einer Endlosschleife und einem anschließenden unmittelbaren Rücksetzen (Reset) und Neustarten (Reboot) der Chipkarte 1. Ziel derartiger Angriffe ist es, möglichst umfangreiche Informationen aus dem Fehlerverhalten der Chipkarte 1 abzuleiten, um daraus wichtige geheime Daten zu rekonstruieren, zum Beispiel kryptographische Schlüssel oder dergleichen.

Demgegenüber treten Zufallsfehlerereignisse in der Regel nicht derart systematisch und zeitlich konzentriert auf, sondern eher zufällig und statistisch verteilt in Folge von Alterungsprozessen oder schädlichen Umwelteinflüssen auf die Chipkarte 1. Jedoch ist es auch bei Zufallsfehlerereignissen möglich, dass diese konzentrierter, beispielsweise orts- oder zeitabhängig, auftreten, falls sich die Chipkarte 1 z.B. in einer Umgebung mit einer solch hohen Strahlungsbelastung befindet, dass dadurch häufiger Datenfehler oder sogar Speicherdefekte verursacht werden. Die Fehlerbehandlungsapplikation 7 ist dann in der Lage, derartige Fehlercharakteristika ausgehend von den unterschiedlichen Fehlerursachen und anhand der zeitbasierten Angriffsfehlerkriterien A und B zu unterscheiden und differenziert zu behandeln.

Prinzipiell können Fehlerereignisse in der Chipkarte 1 fehlerhafte Programmabläufe sein, die zu falschem bzw. undefiniertem Verhalten der Chipkarte 1 führen, oder Datenfehler oder Speicherdefekte im flüchtigen oder nicht-flüchtigen Speicher 2, 3, welche durch Prüfsummenüberwachungen oder dergleichen erkannt werden.

Ein praktisch besonders relevanter systematischer Angriff auf eine Chipkarte 1 ist die sogenannte differentielle Fehleranalyse (DFA-Angriff), bei der physikalische und/oder logische Schwachstellen der Chipkarte 1 bzw. des Prozessors 5 und/ oder des Betriebssystems 16 identifiziert und ausgenutzt werden. Hierbei werden während eines möglichst sicherheitsrelevanten Berechnungsvorgangs - beispielsweise der Berechnung einer kryptographischen Signatur, der Ver- oder Entschlüsselung von Nutzdaten oder der Authentisierung eines Nutzers - mittels physikalischer Einwirkung auf die Chipkarte 1 Datenfehler in einem Speicher 2, 3 hervorgerufen, beispielsweise durch erhöhte Temperatur, starke elektrische Felder, gezielte z.B. ionisierende Bestrahlung oder dergleichen. Diese systematisch in Form von Datenfehlern induzierten Angriffsfehlerereignisse werden dann genutzt, um das Verhalten der Chipkarte 1 zu analysieren und daraus geheime Daten zu rekonstruieren. In diesem Zusammenhang sind insbesondere Strahlungsangriffe gefährlich, da sie nicht durch eine einfache Sensorik frühzeitig erkannt werden können.

Derartige durch DFA- oder ähnliche Angriffe hervorgerufene Angriffsfehlerereignisse können auf vielfältige Weise erkannt werden, z.B. mittels Prüfsummenkriterien oder dergleichen. Auch können gefährdete Programmfunktionen mehrmals mit den gleichen Eingangsparametern ausgeführt und deren Ergebnisse am Ende verglichen werden, so dass bei unterschiedlichen Ergebnissen ein Fehlerereignis angenommen werden kann. Ebenso ist es möglich, redundante Variablen ("Dubletten") einzusetzen und an definierten Punkten im Programmablauf zu vergleichen. Ebenso kann der Programmcode im Rahmen der Überwachung des Programmablaufs mit Markierungen versehen werden, bei deren Erreichen ein Zähler inkrementiert wird und der Zählerwert zu einem bestimmten Zeitpunkt mit einem vorgegebenen Wert verglichen wird.

Ein prototypischer Angriff auf die Chipkarte 1 durch systematisches Hervorrufen von Angriffsfehlerereignissen könnte wie folgt ablaufen. Zunächst findet in der Regel ein "Einblitzen" auf den jeweiligen Chip und die jeweilige Betriebssystem- oder Applikationssoftware statt, also das Ausrichten und Abstimmen des Angriffs auf die konkrete Chipkarte 1. Je nach Qualität der Hardware und der auf der Chipkarte 1 implementierten Fehlererkennungsmechanismen kann das Einblitzen unterschiedlich ausgestaltet sein. Wenn als Ergebnis des Einblitzens jedoch ein angreifbarer Punkt der Chipkarte 1 gefunden wurde, beispielsweise ein geeigneter Zeitpunkt oder eine geeignete Stelle des Mikrocontrollers für einen gezielten Angriff, kann der Angriff mit vergleichsweise wenigen Energieblitzen ausgeführt werden. Während beim Einblitzen durchaus 10.000 und mehr Einzelblitze benötigt werden können, werden bei dem eigentlichen Angriff häufig weniger als 500 Einzelblitze benötigt. Bei Verwendung von Alphastrahlenblitzen ist jedoch von höheren Zahlen auszugehen.

Nach einer solchen Angriffssequenz wird die Chipkarte 1 in der Regel zurückgesetzt (Reset) und neu gestartet (Reboot), um die Chipkarte 1 zu initialisieren und eine etwaige temporäre Blockierung durch eine Endlosschleife aufzuheben. Dies kann z.B. durch einen sogenannten "Warmstart" durchgeführt werden, bei dem die Spannungsversorgung nicht unterbrochen wird, so dass der Speicherinhalt des RAM-Speichers 2 dabei weitgehend erhalten bleibt. Daneben kann auch ein "Kaltstart" durchgeführt werden, bei dem die Spannungsversorgung der Chipkarte 1 für eine kurze Zeit unterbrochen wird, wobei der Speicherinhalt des RAM-Speichers 2 abhängig von der Länge der Unterbrechung und von der Halbleiterbauweise des RAM-Speichers 2 möglicherweise rekonstruiert werden kann.

Die zur Abwehr von DFA-Angriffen üblichen DFA-Zähler haben den Nachteil, dass sie auch Zufallsfehlerereignisse registrieren, die dieselben physikalischen Ursachen haben können, wie Angriffsfehlerereignisse, beispielsweise eine erhöhte Strahlungsbelastung, Lichtblitze oder dergleichen. Aus diesem Grund werden DFA-Zähler zumindest nicht bei (U)SIM-Mobilfunkkarten implementiert und es wird auf jedwedes Fehlerereignis undifferenziert mit einer temporären Blockierung durch eine Endlosschleife reagiert. Dies ist jedoch problematisch, da ein Angreifer daraus die Information ableiten kann, dass sein Angriffsversuch, beispielsweise im Rahmen des "Einblitzens", örtlich und zeitlich wirkungsvoll war.

Üblicherweise entsprechen die auf einer Chipkarte 1 bzw. einer Smart Card implementierten Kommandos dem ISO 7816 Standard, der die wesentlichen physikalischen und softwaretechnischen Merkmale von Chipkarten vereinheitlicht. Während die genauen Kommandos, die Gegenstand eines Angriffs sind, durchaus unterschiedlich sein können und vom konkreten Einzelfall abhängen, richten sich derartige Angriffe sinnvoller Weise zumindest auch gegen das Read- oder Update-Kommando oder gegen andere Daten lesende und/oder Daten schreibende Kommandos gemäß ISO 7816, oder gegen spezielle Applikationskommandos oder Kommandos im Zusammenhang mit der Ausführung von installierten oder nachgeladenen Applets. Die Abarbeitungszeit solcher Kommandos, während der ein sinnvoller Angriff stattfinden kann, ist hierbei von dem jeweiligen konkreten Kommando abhängig. So ist die Ausführungsdauer eines ReadBinary-Kommandos mit wenigen Datenbits nur wenige Millisekunden, während die Abarbeitung eines komplexen Appletkommandos auch eine Sekunde oder länger andauern kann.

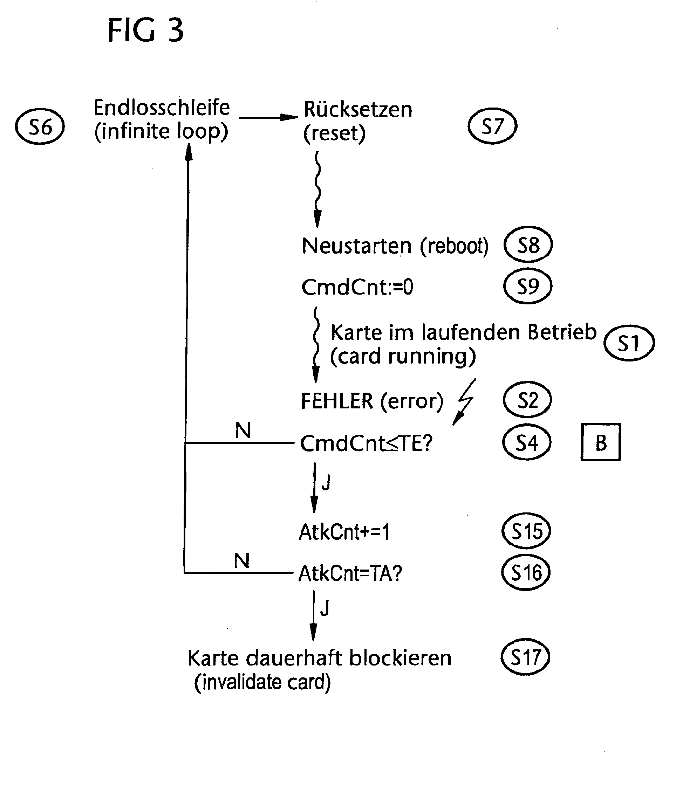

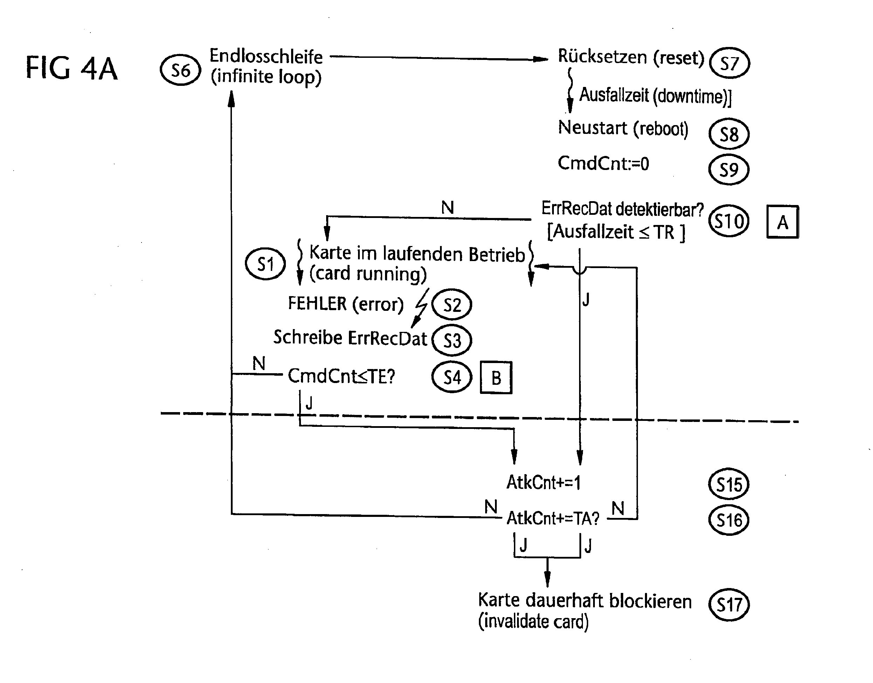

Die Figuren 2 und 3 illustrieren zwei unterschiedliche zeitabhängige Angriffsfehlerkriterien, nämlich einerseits die Unterschreitung einer Neustart-Zeitspanne (Kriterium A in Fig. 2,4a) und andererseits die Unterschreitung einer Fehler-Zeitspanne (Kriterium B in Fig. 3, 4a). Bei der Prüfung der Neustart-Zeitspanne TR gemäß Figur 2 wird die Ausfallzeit der Chipkarte 1 ("Downtime") zwischen einem Reset und einem Reboot nach einem aufgetretenen Fehlerereignis beurteilt, während bei der Prüfung der Fehler-Zeitspanne die Zeitdauer zwischen dem Reboot der Chipkarte 1 und einem danach auftretenden Fehler beurteilt wird.

Bei dem Verfahren gemäß Fig. 2 befindet sich die Chipkarte 1 in Schritt S1 im laufenden Betrieb ("card running"), bis in Schritt S2 ein Fehlerereignis ("ERROR") auftritt, welches von der Fehlerbehandlungsapplikation 7 gemäß einem der oben genannten Erkennungsverfahren erkannt wird. Möglichst unmittelbar im Anschluss an die Erkennung des Fehlers werden in Schritt S3 Fehlererkennungsdaten 8 in den RAM-Speicher 2 geschrieben ("write ErrRecDat"), beispielsweise ein charakteristisches Bit- oder Bytemuster (z.B. 0X00 0XFF 0X00 0XFF), welches signalisiert, dass ein Fehlerereignis stattgefunden hat. Die Chipkarte 1 wird dann von der Fehlerbehandlungsapplikation 7 in Schritt S6 durch eine Endlosschleife temporär blockiert ("infinite loop"), worauf ein Nutzer bzw. Angreifer die Chipkarte 1 in Schritt S7 rücksetzt ("reset") und dadurch ausschaltet.

Die Fehlererkennungsdaten 8 werden in Schritt S3 in den RAM-Speicher 2 geschrieben, um erkennen zu können, ob die Chipkarte 1 nach einem Fehlerereignis nur kurz ausgeschaltet bzw. "resettet" wird, damit der Angriff dann möglichst schnell fortgeführt werden kann. Falls nach dem Reset in Schritt S7 die Spannungsversorgung nur kurz oder gar nicht unterbrochen wird, z.B. durch einen schnellen Kaltstart oder einen Warmstart, bleibt der Speicherinhalt des RAM-Speichers 2 mit den Fehlererkennungsdaten 8 in Schritt S8 zumindest teilweise erhalten, so dass diese in Schritt S11 noch im RAM-Speicher 2 detektiert werden können ("ErrRecDat detactable ?").

Das in Schritt S11 geprüfte Kriterium A des zumindest noch teilweisen Vorhandenseins der Fehlererkennungsdaten 8 in dem RAM-Speicher 2 nach Reset und Reboot in den Schritten S7 und S8 repräsentiert also die Prüfung, ob die fehlerbedingte Ausfallzeit ("Downtime") die durch den RAM-Speicher 2 vorgegebene Neustart-Zeitspanne TR unterschreitet (die Fehlererkennungsdaten 8 sind noch teilweise lesbar) oder überschreitet (die Fehlererkennungsdaten 8 sind nicht mehr lesbar).

Bei Feststellen eines Unterschreitens der Neustart-Zeitspanne TR in Schritt S11 wird von einem Angriffsfehlerereignis ausgegangen und der Angriffsfehlerzähler 14 in Schritt S15 inkrementiert (AtkCnt +=1). In Schritt S16 wird überprüft, ob der Angriffsfehlerzähler 14 bereits eine vorgegebene Maximalangriffsfehlerzahl TA überschritten hat (AtkCnt = TA ?). Falls dies der Fall ist, wird von einem kritischen Angriff auf die Chipkarte 1 ausgegangen, und diese in Schritt S17 dauerhaft blockiert ("invalidate card"), um das Angriffsrisiko möglichst schnell zu minimieren.

Sofern jedoch die Spannungsversorgung zwischen Reset und Reboot mehrere Sekunden unterbrochen ist, so wie dies üblicherweise bei einem herkömmlichen Reset und Kaltstart einer Chipkarte 1 in einem Mobilfunkendgerät der Fall ist, gehen die Fehlererkennungsdaten 8 in dem RAM-Speicher 2 verloren. Dann ist davon auszugehen, dass gerade kein Angriffsfehlerereignis sondern vielmehr ein anderweitiges Fehlerereignis vorliegt, beispielsweise ein Zufallsfehlerereignis.

Der benötigte Grad der Übereinstimmung zwischen den in Schritt S3 in den RAM-Speicher 2 eingeschriebenen Fehlererkennungsdaten 8 und den in Schritt S11 rekonstruierten Fehlererkennungsdaten 8 kann nahezu beliebig festgelegt werden, beispielsweise mittels einer geeigneten Ähnlichkeitsmetrik oder dergleichen.

Die Neustart-Zeitspanne TR ist abhängig von der verwendeten Chipkartenhardware, da Mikrocontroller aufgrund unterschiedlicher Fertigungstechniken individuell arbeiten. Deshalb werden zur Implementierung der Neustart-Zeitspanne TR gemäß Fig. 2 und deren Prüfung in Schritt S11 spezielle Chipkartenchips ausgesucht und Tests durchgeführt, um die hardwareabhängige Neustart-Zeitspanne TR zu ermitteln, die in der Regel zwar länger ist, als die übliche Ausfallzeit der Chipkarte 1 im Rahmen eines systematischen DFA-Angriffs, jedoch kürzer als ein herkömmlicher manueller Reset durch einen berechtigten Nutzer der Chipkarte 1 bzw. des betreffenden Telekommunikationsendgeräts.

Als Vergleichsoperation zwischen den in Schritt S3 abgespeicherten und den in Schritt S11 noch im RAM-Speicher 2 aufgefundenen Fehlererkennungsdaten 8 bietet sich eine bitweise XOR-Operation an, bei der die Fehlererkennungsdaten 8 mit dem betreffenden Speicherinhalt per exklusivem ODER verglichen werden. Anhand der Rate der korrekten Bits der Fehlererkennungsdaten 8 wird dann eine Entscheidung darüber getroffen, ob die Fehlererkennungsdaten 8 noch als im RAM-Speicher 2 auffindbar gelten oder nicht.

In Schritt S17 wird die Chipkarte 1 vorzugsweise dauerhaft blockiert, da der Angriffsfehlerzähler 14 eine Maximalangriffsfehlerzahl TA erreicht hat und deshalb von einem akuten Angriff auf die Chipkarte 1 auszugehen ist. Zusätzlich kann eine Warnmitteilung an den Nutzer oder an ein Hintergrundsystem ausgesandt werden, welches z.B. von dem Chipkartenhersteller oder -herausgeber betrieben wird, beispielsweise über eine Kurzmitteilung, eine e-Mail, ein Funksignal oder ein sonstiges geeignetes Datenkommunikationsverfahren. Die dauerhafte Blockierung in Schritt S17 besteht vorzugsweise darin, die Chipkarte 1 unbrauchbar zu machen, so dass sie nicht mehr eingesetzt werden kann. Vorzugsweise werden auch automatisiert die wichtigen oder alle Daten der Chipkarte 1 irreversibel gelöscht, um das Missbrauchsrisiko zu minimieren.

Sofern eine der Entscheidungen der Schritte S11 oder S16 negativ beantwort wird, das heißt, wenn die Fehlererkennungsdaten 8 in Schritt S11 nicht im RAM-Speicher 2 aufgefunden werden können oder wenn der Angriffsfehlerzähler 14 in Schritt S16 noch nicht die Maximalangriffsfehlerzahl TA erreicht hat, kehrt die Chipkarte 1 wieder in den ordnungsgemäß laufenden Betriebszustand des Schritts S1 zurück, da die Registrierung und Behandlung des zuvor in Schritt S2 festgestellten Fehlers abgeschlossen ist.

Das Schalten in eine Endlosschleife in Schritt S6 nach Auftreten des Fehlers in Schritt S2 ist die übliche Vorgehensweise bei einer Fehlerbehandlung durch die Fehlerbehandlungsapplikation 7, um zu verhindern, dass mit der nunmehr fehlerbehafteten, manipulierten Chipkarte 1 weiter gearbeitet wird. So soll im Falle eines Angriffsfehlerereignisses in Schritt S2 verhindert werden, dass sensible und vertrauenswürdige Daten der Chipkarte 1 durch das Angriffsfehlerereignis zugänglich werden, beispielsweise indem solche Daten in den Ausgabepuffer kopiert werden und dort von dem Angreifer mittels eines Ein-/Ausgabekommandos abgegriffen werden können. In einer Endlosschleife können Daten in dem Ausgabepuffer nicht mehr abgegriffen werden, denn die Karte ist dann temporär blockiert und muss mit Hilfe eines Resets wieder initialisiert werden, wobei zumindest die Daten im Ausgabepuffer überschrieben werden.

Das in Fig. 2 illustrierte Verfahren, gemäß dem ein Unterschreiten der Neustart-Zeitspanne TR als zeitbasiertes Angriffsfehlerkriterium A in Schritt S11 geprüft wird, prüft eigentlich, ob auf ein vorangegangenes Fehlerereignis ein schneller Neustart (Reset/Reboot) der Chipkarte 1 folgte. Das in Fig. 3 illustrierte Verfahren prüft demgegenüber ob ein Fehlerereignis eine Fehler-Zeitspanne - vorgegeben durch eine Maximalkommandozahl TE - unterschritten hat und insofern, ob nach einem Neustart ein schnelles Fehlerereignis stattgefunden hat, welches ebenfalls auf ein Angriffsfehlerereignis hindeutet (Angriffsfehlerkriterium B).

Gemäß dem Verfahren nach Fig. 3, welches alternativ oder zusätzlich zu dem in Fig. 2 gezeigten Verfahren einsetzbar ist, wird unmittelbar nach dem Reboot der Chipkarte 1 in Schritt S8 der Kommandozähler 13 in Schritt S9 initialisiert (CmdCnt := 0), woraufhin die Chipkarte 1 in den ordnungsgemäß laufenden Betrieb des Schritts S1 übergeht. Während des laufenden Betriebs zählt die Fehlerbehandlungsapplikation 7 oder das Betriebssystem 16 die von der Chipkarte 1 bzw. von deren Prozessor 5 ausgeführten Chipkartenkommandos mittels des Kommandozählers 13, so dass der Kommandozähler 13 bei Auftreten eines Fehlerereignisses in Schritt S2 die Anzahl der Chipkartenkommandos angibt, die von der Chipkarte 1 zwischen dem Reboot (Schritt S8) und dem Fehlerereignis (Schritt S2) abgearbeitet wurden.

Sofern die Fehlerbehandlungsapplikation 7 anschließend in dem das zeitbasierte Angriffsfehlerkriterium B prüfenden Schritt S4 (CmdCnt ≤ TE ?) festgestellt, dass der Zählerstand des Kommandozählers 13 unterhalb der Maximallcommandozahl TE liegt, ist von einem Angriffsfehlerereignis auszugehen, da das Fehlerereignis innerhalb einer durch die Maximalkommandozahl TE vorgegebenen Fehler-Zeitspanne nach dem Reboot aufgetreten ist. In diesem Fall wird analog zu dem Verfahren nach Figur 2 in Schritt S15 der Angriffsfehlerzähler 14 inkrementiert und in Schritt S16 geprüft, ob der Zählerstand des Angriffsfehlerzählers 14 die Maximalangriffsfehlerzahl TA erreicht hat. Falls dies der Fall ist, wird die Chipkarte 1 in Schritt S17 dauerhaft blockiert.

Sofern weder in Schritte S4 festgestellt wird, dass das erkannte Fehlerereignis die Maximalkommandozahl TE unterschritten hat, noch in Schritt S16 festgestellt wird, dass der Angriffsfehlerzähler 14 die Maximalangriffsfehlerzahl TA erreicht hat, wird die Chipkarte 1 von der Fehlerbehandlungsapplikation 7 in Schritt S6 mittels einer Endlosschleife temporär blockiert. Nach einem anschließenden Reset in Schritt S7 beginnt das Verfahren dann von neuem.

Die Fehler-Zeitspanne wird hierbei indirekt durch die Maximalkommandozahl TE vorgegeben und mittels des Kommandofehlerzählers 13 gemessen. Hierbei ist zu berücksichtigen, dass eine Chipkarte 1, z.B. eine (U)SIM-Mobilfunkkarte oder dergleichen, in den ersten zwei Minuten nach einen Reboot in der Regel circa 1.000 Kommandos ausführt, so dass die Fehler-Zeitspanne durchaus durch eine Maximalkommandozahl TE von 5.000 bis 10.000 Kommandos vorgegeben werden kann. Eine typische Angriffskommandosequenz umfasst demgegenüber selten mehr als 100 Kommandos, so dass ein dadurch verursachtes Angriffsfehlerereignis sicher erkannt werden kann.

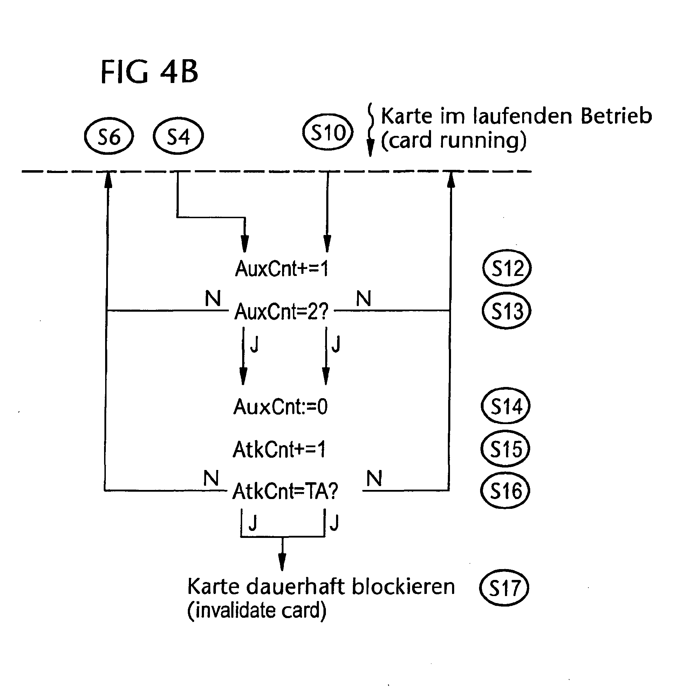

Die Figuren 4a und 4b illustrieren ein kombiniertes Fehlererkennungs- und Fehlerbehandlungsverfahren, welches sowohl die Überprüfung einer Neustart-Zeitspanne (Kriterium A) gemäß Figur 2 als auch die Überprüfung einer Fehler-Zeitspanne (Kriterium B) gemäß Figur 3 umfasst. Hierbei entspricht die Nummerierung der Schritte der Figuren 4a und 4b derjenigen der Figuren 2 und 3.

Gemäß Fig. 4a werden nach Auftreten eines Fehlerereignisses in Schritt S2 die Fehlererkennungsdaten 8 in Schritt S3 in den RAM-Speicher 2 geschrieben. Anschließend wird direkt in Schritt S4 geprüft, ob der Kommandozähler 13, der nach dem Reboot der Chipkarte 1 in Schritt S8 in Schritt S9 initialisiert wurde, die Maximalkommandozahl TE unterschreitet. Falls dies der Fall ist, wird das in Schritt S2 aufgetretene Fehlerereignis in den Schritten S15 bis S17 als Angriffsfehlerereignis registriert.

Falls dies nicht der Fall ist, löst die Fehlerbehandlungsapplikation 7 in Schritt S6 eine Endlosschleife aus, die in Schritt S7 durch einen Reset beendet wird. Nach dem anschließenden Reboot in Schritt S8 wird wieder in Schritt S9 der Kommandozähler 13 initialisiert und in Schritt S10 geprüft, ob die in Schritt S2 in den RAM-Speicher 2 eingeschriebenen Fehlererkennungsdaten 8 noch zumindest teilweise in dem RAM-Speicher 2 vorhanden sind. Falls dies der Fall ist, wird der in Schritt S2 aufgetretene Fehler (erneut oder erstmals) mit den Schritten S15 bis S17 als Angriffsfehlerereignis registriert.

Bei diesem kombinierten Verfahren werden die zeitbasierten Angriffsfehlerkriterien A und B kombiniert, so dass der Angriffsfehlerzähler 14 infolge eines in Schritt S2 aufgetretenen Fehlerereignisses auch zweimal mit einem Schritt S15 inkrementiert werden kann, nämlich einerseits aufgrund einer Feststellung in Schritt S4, dass das Fehlerereignis noch innerhalb der durch die Maximalkommandozahl TE vorgegebenen Fehler-Zeitspanne erfolgt ist, und andererseits aufgrund einer Feststellung in Schritt S10, dass das auf die Endlosschleife in Schritt S6 erfolgte Reset (Schritt S7) und Reboot (Schritt S8) innerhalb der Neustart-Zeitspanne TR erfolgt ist.

In dem Fall, dass beide Angriffsfehlerkriterien A und B erfüllt sind, wird in Schritt S4 das Unterschreiten der Fehler-Zeitspanne festgestellt und in Schritt S15 der Angriffsfehlerzähler 14 inkrementiert. Falls der Angriffsfehlerzähler 14 in Schritt S16 noch unterhalb der Maximalangriffsfehlerzahl TA liegt, wird die Chipkarte 1 in Schritt S6 mit einer Endlosschleife temporär blockiert und in den Schritten S7 und S8 rückgesetzt und neugestartet, woraufhin in Schritt S10 auch das Unterschreiten der Neustart-Zeitspanne festgestellt wird und der Angriffsfehlerzähler 14 in Schritt S15 erneut inkrementiert wird.

Das in Fig. 2 geprüfte Angriffsfehlerkriterium A (schneller Neustart nach einem Fehlerereignis) und das in Fig. 3 geprüfte Angriffsfehlerkriterium B (schnelles Fehlerereignis nach Neustart) werden in Figur 4a also dahingehend kombiniert, dass ein schnelles Fehlerereignis (Schritt S4) nach einem schnellen Neustart (Schritt S10) bzw. ein schneller Neustart (Schritt S10) nach einem schnellen Fehler (Schritt S4) erkannt werden kann.

Gemäß der Ausführungsvariante der Fig. 4b wird dem Angriffsfehlerzähler 14 ein Hilfsfehlerzähler 15 vorgeschaltet, der nach Feststellen eines Angriffsfehlerereignisses in Schritt S4 oder Schritt S10 in Schritt S12 inkrementiert wird (AuxCnt += 1). Falls der Hilfszähler 15 in Schritt S13 gleich zwei ist (AuxCnt = 2 ?), wird er in Schritt S14 initialisiert (AuxCnt := 0) und in Schritt S15 wird der eigentliche Angriffsfehlerzähler 14 inkrementiert bis in Schritt S16 das Erreichen der Maximalfehlerereigniszahl TA festgestellt wird und die Chipkarte 1 in Schritt S17 blockiert wird. Auf diese Weise wird nur dann ein Angriffsfehlerereignis registriert, wenn das in Schritt S2 aufgetretene Fehlerereignis sowohl die Neustart-Zeitspanne (Schritt S10) als auch die Fehler-Zeitspanne (Schritt S4) unterschritten hat, und das in beliebiger Reihenfolge.

Darüber hinaus gibt es auch die Variante, dass die Fehlerbehandlungen in den Schritten S12 bis S17 durch die Fehlerbehandlungsapplikation 7 derart eingerichtet sind, dass in Schritt S15 nur Angriffsfehlerereignisse (Schritt S2) registriert werden, die bei aufeinander folgenden Reboots der Chipkarte 1 aufgetreten sind. Dadurch kann ein dauerhaftes und konstantes Auftreten von Angriffsfehlerereignissen über eine vorgegebene Anzahl von Zyklen berücksichtigt werden.

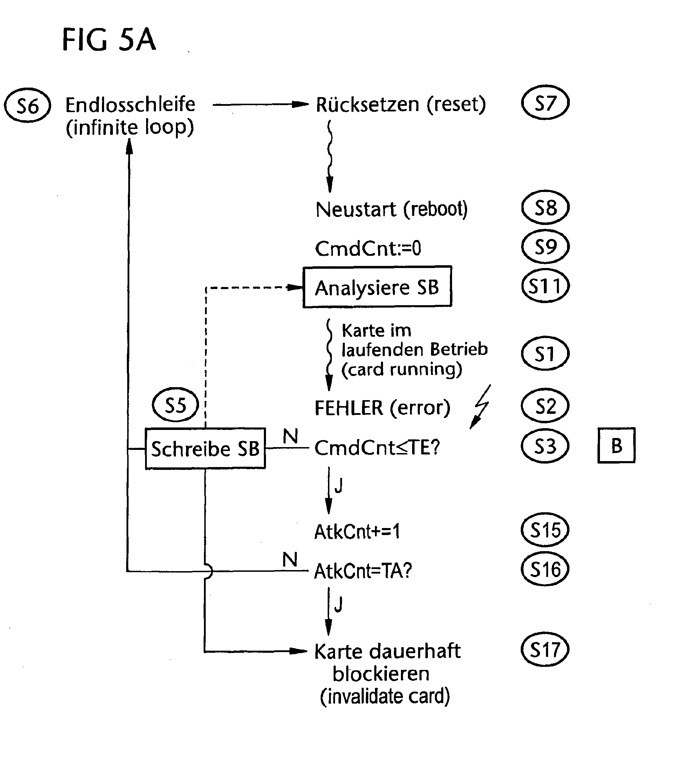

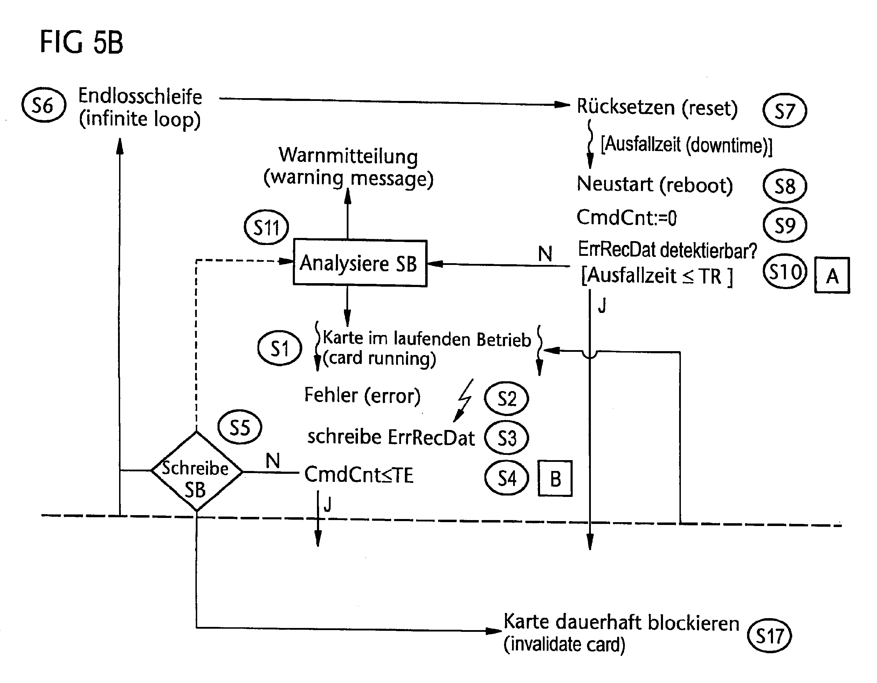

Die Figuren 5a und 5b basieren auf den Figuren 3 und 4a und umfassen jeweils über diese beiden Figuren hinausgehend einen Schritt S5, in dem ein Fehlerereignis als Zufallsfehlerereignis registriert wird ("write SB"), und einen Schritt S11, in dem registrierte Zufallsfehlerereignisse dahingehend analysiert werden, ob sie in einer kritischen Häufung auftreten ("analyse SB"). Der Schritt S5 des Registrierens eines Zufallsfehlerereignisses schließt unmittelbar daran an, dass in Schritt S3 festgestellt wird, dass das in Schritt S2 aufgetretene Fehlerereignis nicht die Fehler-Zeitspanne unterschritten hat und deshalb kein Angriffsfehlerereignis ist. Nach dem Registrieren eines Zufallsfehlerereignisses in Schritt S5 schaltet die Fehlerbehandlungsapplikation 7 die Chipkarte 1 in Schritt S6 in eine Endlosschleife, um negative Auswirkungen oder Gefährdungen der Chipkarte 1 durch das in Schritt S2 aufgetretene Fehlerereignis zu vermeiden.

Die Analyse von Fehlerereignissen, die in Schritt S5 als Zufallsfehlerereignisse registriert wurden, findet nach dem Rebooten der Chipkarte 1 in Schritt S11 statt und hat, wie in Figur 5b illustriert, eine Warnmitteilung ("warning message") oder eine sonstige Fehlerbehandlung durch die Fehlerbehandlungsapplikation 7 zur Folge, sofern die Analyse in Schritt S11 ergibt, dass sich die Zufallsfehlerereignisse in einer kritischen Weise häufen, was auf eine erhöhte Gefährdung der Chipkarte 1 durch Umwelteinflüsse hindeutet, beispielsweise auf eine erhöhte Strahlungsbelastung. Neben der eigentlichen Warnmitteilung an den Nutzer, beispielsweise über eine Kurznachricht oder eine Mitteilung auf einem Anzeigedisplay eines Mobilfunkendgeräts, in das die Chipkarte 1 eingesetzt ist, kann auch eine entsprechende Mitteilung an ein Hintergrund- bzw. Sicherheitssystem eines Herausgebers oder Herstellers der Chipkarte 1 oder einer sonstigen vertrauenswürdigen oder Sicherheitsstelle erfolgen.

Darüber hinaus kann die Chipkarte 1 natürlich auch temporär oder dauerhaft blockiert werden, um die Strahlungsbelastung und deren negativen Einfluss auf die gespeicherten Daten und den Programmablauf der Chipkarte 1 zu minimieren.

Ein in Schritt S5 registriertes Zufallsfehlerereignis ist in der Regel ein Datenfehler in einem fehlerhaften Speicherblock 9 des nicht-flüchtigen Flash-Speichers 3 der Chipkarte 1. Ein derartiger Datenfehler wird, wie bereits erläutert, durch ein geeignetes Erkennungsverfahren im Zusammenhang mit Schritt S2 detektiert, beispielsweise durch einen Prüfsummenvergleich, redundante Berechnung oder Speicherung oder dergleichen. Sofern es sich lediglich um einen einfachen Datenfehler im Speicherblock 9 handelt, kann er möglicherweise bereits aufgrund der zur Verfügung stehenden Prüfsumme im laufenden Betrieb der Chipkarte 1 korrigiert werden, sofern die Prüfsumme Fehlerkorrektureigenschaften besitzt.

Sofern der Datenfehler im laufenden Betrieb korrigierbar ist, kann nach Schritt S5 auch direkt der Schritt S11 folgen, unter Umgehung der Endlosschleife und des Resets und Reboots in den Schritten S6 bis S8. Vorzugsweise wird jedoch aus Sicherheitsgründen selbst bei einem im laufenden Betrieb korrigierbaren Datenfehler mit Schritt S6 eine Endlosschleife geschaltet. Sofern der Datenfehler im Speicherblock 9 im laufenden Betrieb jedoch nicht korrigierbar ist, muss die Chipkarte 1 in Schritt S6 ohnehin mittels einer Endlosschleife temporär blockiert werden, damit der fehlerhafte Speicherblock 9 durch die Initialisierung der Chipkarte 1 in den Schritten S7 und Schritt S8 neu beschrieben wird.

Daneben ist es auch möglich, dass sich der Datenfehler in Speicherblock 9 als Speicherdefekt herausstellt, also als tatsächlich (möglicherweise strahlungsbedingt) defekte Speicherzelle, die bei der weiteren Verwendung der Chipkarte 1 dauerhaft ausfällt. Ein solcher Speicherdefekt kann von der Fehlerbehandlungsapplikation 7 dadurch erkannt werden, dass eine Fehlerkorrektur des betreffenden Speicherblocks 9 scheitert, z.B. weil selbst nach einem Korrekturversuch die Prüfsumme des Speicherblocks 9 bzw. des Speicherbereichs in dem der Speicherblock 9 liegt, noch immer nicht mit der vorgegebenen Prüfsumme übereinstimmt. In diesem Falle stellt die Fehlerbehandlungsapplikation 7 einen Ersatzspeicherblock 10 bereit, in den die Daten aus dem fehlerhaften Speicherblock 9 umkopiert werden und in dem gegebenenfalls eine Fehlerkorrektur stattfindet. Gleichzeitig werden die Speicheradressen des Ersatzspeicherblocks 10 der Speicherverwaltung des Betriebssystems 16 mitgeteilt, damit Zugriffe auf den fehlerhaften Speicherblock 9 zukünftig umgeleitet werden können auf den Ersatzspeicherblock 10.

Sofern es sich jedoch um einen derart gravierenden Speicherdefekt handelt, dass er auch nicht durch Bereitstellen eines Ersatzspeicherblocks 10 und Auslagern der betreffenden Daten kompensiert werden kann, beispielsweise weil der Datenverlust derart umfangreich bzw. die verlorenen Daten derart wichtig sind, dass eine Korrektur auch nach Initialisierung der Chipkarte 1 nicht gelingen kann, kann aus dem Schritt S5 unmittelbar in den Schritt S17 verzweigt und die Chipkarte 1 dauerhaft blockiert werden, gegebenenfalls begleitet durch entsprechende Warnmitteilungen an einen Nutzer der Chipkarte 1.

Darüber hinaus gibt es noch die Möglichkeit, dass der Datenfehler im fehlerhaften Speicherblock 9 nicht relevant ist und im laufenden Betrieb gar nicht stört, beispielsweise weil temporäre Daten betroffen sind, die ohnehin regelmäßig überschrieben werden, z.B. Daten in einer Mobilfunkkarte, die einzelne Funkzellenwechsel betreffen und häufig aktualisiert oder überschrieben werden.

In Schritt S5 wird neben einer möglichen der Fehlerkorrektur auch eine Fehlerregistrierung durchgeführt, indem Fehlerstatusdaten 12 für bestimmte oder sogar alle erkannten Zufallsfehlerereignisse in einen Statusspeicherbereich 11 im Flash-Speicher 3 eingeschrieben werden. Die Fehlerstatusdaten 12 umfassen zumindest die Speicheradresse des betreffenden fehlerhaften Speicherblocks 9 und können zusätzlich noch weitere diesbezügliche Informationen umfassen, z.B. örtliche und zeitliche Informationen, die angeben, an welchem konkreten Ort und zu welchem konkreten Zeitpunkt der Datenfehler aufgetreten ist bzw. erkannt wurde. Derartige örtliche und/oder zeitliche Informationen kann die Chipkarte 1 beispielsweise von einem entsprechend ausgestatteten Telekommunikationsendgerät erhalten, mit dem die Chipkarte 1 verbunden ist.

Hierbei ist es einerseits möglich, dass sämtliche Zufallsfehlerereignisse in Form von Fehlerstatusinformationen 12 von der Fehlerbehandlungsapplikation 7 registriert werden, oder nur solche, die tatsächliche Speicherdefekte betreffen und ein Auslagern der fehlerhaften Daten in einen Ersatzspeicherblock 10 erfordern, da derartige Speicherdefekte auf gravierendere äußere Einflüsse schließen lassen - beispielsweise auf eine erhebliche Strahlungsbelastung der Chipkarte 1 - als einfache Datenfehler, die im regulären Betrieb gelegentlich auftreten können.

Die in dem Statusspeicherbereich 11 vorhandenen Fehlerstatusinformationen 12 werden dann in Schritt S11 analysiert. Bei dieser Analyse wird beispielsweise geprüft, ob in einem bestimmten Ortsbereich oder einem bestimmten Zeitfenster besonders viele Zufallsfehlerereignisse mittels Fehlerstatusinformationen 12 registriert wurden. Entsprechend kann der Nutzer oder ein Sicherheits- bzw. Hintergrundsystem darauf hingewiesen werden. Darüber wird in Schritt S11 auch geprüft, ob eine zeitliche Häufung von Zufallsfehlerereignissen stattgefunden hat oder stattfindet oder das Auftreten von Zufallsfehlerereignissen sich beschleunigt, was beides Hinweise auf einen fortgeschrittenen Alterungsprozess der Chipkarte 1 oder ungünstige Umweltbedingungen sind.

Insbesondere kann die Fehlerbehandlungsapplikation 7 in Schritt S11 auch feststellen, wenn unmittelbar vor dem letzten Reset der Chipkarte 1 in Schritt S7 Fehlerstatusinformationen 12 in den Statusspeicherbereich 11 eingeschrieben wurden und ob derartige fehlerbedingte Resets mehrmals nacheinander aufgetreten sind, was auch ein Indiz für ungünstige Umweltbedingungen, beispielsweise eine hohe Strahlenbelastung, oder eine fortgeschrittene Alterung der Chipkarte 1 sein kann. In Schritt S11 kann darüber hinaus festgestellt werden, ob seit dem vorletzten fehlerbedingten Reset weitere Fehlerstatusinformationen 12 in den Statusspeicherbereich 11 eingeschrieben wurden, woraus ableitbar ist, dass der letzte Reset der Chipkarte 1 aufgrund eines Zufallsfehlerereignisses und einer anschließenden Endlosschleife notwendig wurde.

Derartige oder ähnliche Informationen sind natürlich auch aus anderen Datenstrukturen ableitbar, beispielsweise aus Zufallsfehlerzählern analog zu dem Angriffsfehlerzähler 14 oder geeignet initialisierten und abgefragten Flags im nicht-flüchtigen Speicher 3. Diese Informationen stecken aber implizit auch im Statusspeicherbereich 11, der entsprechend ausgewertet werden kann.

Prinzipiell können in die Fehlerstatusinformationen 12 sämtliche Informationen eingehen, die mit dem SIM-Toolkit-Kommando "provide local information" unterstützt durch ein Telekommunikationsendgerät ermittelt werden können. Diese sind beispielsweise das aktuelle Datum, die aktuelle Uhrzeit, die Zeitzone, weitere Ortskoordinaten, die eindeutige Identifikationsnummer des Telekommunikationsendgeräts (IMEI) und dergleichen mehr. Darüber hinaus gibt es auch weitere proaktive Chipkartenkommandos, zum Beispiel das Kommando "timer management", welche weitere Zeitmessungen erlauben und deren Ausgangsdaten in die Fehlerstatusinformation 12 eingehen und bei der Analyse des Statusspeicherbereichs 11 in Schritt S11 genutzt werden können.

Daneben gibt es insbesondere im Mobilfunkkartenbereich vielerlei anderweitige Verwendungen von Zeitinformationen, die in die Fehlerstatusinformationen 12 eingebracht werden können oder als Grundlage für die genannten oder weiteren zeitbasierten Angriffsfehlerereignisse genutzt werden können. Hierbei ist zu berücksichtigen, dass eine Mobilfunkkarte circa alle 30 Sekunden ein Status-Kommando abarbeitet und bei jedem Mobilfunkzellenwechsel weitere Mobilfunkkommandos ausgeführt und Daten in die Mobilfunkkarte eingeschrieben werden. Hinzu kommen noch Authentisierungssequenzen des Netzbetreibers und weitere Kommandos während eines Gesprächs. Bei jedem Mobilfunkzellenwechsel werden 10 bis 20 Kommandos ausgeführt und bei jedem Telefonat bzw. jeder Kurzmitteilung werden weitere Kommandos ausgeführt. Nach einem Reboot der Chipkarte 1 werden zusätzlich, je nach Kartenkonfiguration, in den ersten 120 Sekunden weitere 500 bis 2.000 Kommandos abgearbeitet.

## Patentansprüche

1. Verfahren in einem portablen Datenträger (1) zum Detektieren von Angriffen auf den Datenträger (1), umfassend die Schritte des
- Erkennens (S2) eines Fehlerereignisses in dem Datenträger (1);
- Registrierens (S15, S12, S5) des erkannten Fehlerereignisses mittels eines Fehlerzählers (13,14,11); und des
- Einleitens (S6, S17) von Schutzmaßnahmen abhängig von einem Zählerstand des Fehlerzählers (13,14,11);
wobei das Fehlerereignis (S2) nur dann mittels eines Angriffsfehlerzählers (14) als Angriffsfehlerereignis registriert wird (S15), wenn das Fehlerereignis zumindest ein zeitbasiertes Angriffsfehlerkriterium (A, B) erfüllt (S4, S11),
**dadurch gekennzeichnet, dass** das Fehlerereignis (S2) als Angriffsfehlereignis registriert wird (S15), wenn ein Unterschreiten einer vorgegebenen Neustart-Zeitspanne (TR) festgestellt wird (S11), welche die Zeitspanne zwischen dem letzten Neustarten (S8) des Datenträgers (1) und dem vorhergehenden Rücksetzen (S7) des Datenträgers (1) aufgrund des Fehlerereignisses (S2) angibt,
wobei das Unterschreiten der Neustart-Zeitspanne (TR) festgestellt wird (S11), wenn vor dem letzten Rücksetzen (S7) des Datenträgers (1) in einen flüchtigen Speicher (2) des Datenträgers (1) eingeschriebene Fehlererkennungsdaten (8) nach dem darauffolgenden Neustarten (S8) des Datenträgers (1) zumindest teilweise noch in dem flüchtigen Speicher (2) vorhanden sind.

2. Verfahren nach Anspruch 1, **dadurch gekennzeichnet, dass** das Fehlerereignis (S2) als Angriffsfehlereignis registriert wird (S15), wenn ein Unterschreiten einer vorgegebenen Fehler-Zeitspanne festgestellt wird (S4), welche die Zeitspanne zwischen dem letzten Neustarten (S8) des Datenträgers (1) und dem erkannten Fehlerereignis (S2) angibt.

3. Verfahren nach Anspruch 1 oder 2, **dadurch gekennzeichnet, dass** das Fehlerereignis (S2) als Angriffsfehlereignis registriert wird (S15), wenn das Unterschreiten der vorgegebenen Neustart-Zeitspanne (TR) und das Unterschreiten der vorgegebenen Fehler-Zeitspanne nacheinander festgestellt wird (S11, S4) oder das Unterschreiten der vorgegebenen Fehler-Zeitspanne und der vorgegebenen Neustart-Zeitspanne (TR) nacheinander festgestellt wird (S4, S11).

4. Verfahren nach Anspruch 1 oder 3, **dadurch gekennzeichnet, dass** beim Erkennen (S2) des Fehlerereignisses Fehlererkennungsdaten (8) in einen flüchtigen Speicher (2) des Datenträgers (1) eingeschrieben werden (S3).

5. Verfahren nach Anspruch 2 oder 3 und Anspruch 4, **dadurch gekennzeichnet, dass** Fehlererkennungsdaten (8) in den flüchtigen Speicher (2) eingeschrieben werden (S3), die angeben, dass beim Erkennen (S2) des Fehlerereignisses ein Unterschreiten der vorgegebenen Fehler-Zeitspanne festgestellt wurde (S4).

6. Verfahren nach Anspruch 2,3 oder 5, **dadurch gekennzeichnet, dass** das Unterschreiten der Fehler-Zeitspanne festgestellt wird (S4), wenn ein Zählerstand eines Kommandozählers (13), der eine Anzahl von auf dem Datenträger (1) seit dem letzten Neustarten (S8) abgearbeiteten Kommandos angibt, bei Erkennen (S2) des Fehlerereignisses unterhalb einer vorgegebenen Maximalkommandoanzahl (TE) liegt.

7. Verfahren nach einem der Ansprüche 1 bis 6, **dadurch gekennzeichnet, dass** der Datenträger (1) dauerhaft blockiert wird (S17), wenn bei einer vorgegebenen Anzahl von aufeinanderfolgenden Neustarts (S8) ein Unterschreiten der Neustart-Zeitspanne (TR) und/ oder der Fehler-Zeitspanne festgestellt wird (S10, S4).

8. Verfahren nach einem der Ansprüche 1 bis 7, **dadurch gekennzeichnet, dass** der Datenträger (1) nach Erkennen (S10) eines Unterschreitens der Neustart-Zeitspanne (TR) regulär weiterbetrieben wird (S1) und/oder nach Erkennen (S4) eines Unterschreitens der Fehler-Zeitspanne bis zum Rücksetzen (S7) und Neustarten (S8) blockiert wird (S6).

9. Verfahren nach einem der Ansprüche 1 bis 8, **dadurch gekennzeichnet, dass** der Datenträger (1) dauerhaft blockiert (S17) wird, wenn der Angriffsfehlerzähler (14) eine vorgegebene Maximalangriffsfehleranzahl (TA) erreicht (S16).

10. Verfahren nach einem der Ansprüche 1 bis 9, **dadurch gekennzeichnet, dass** der Datenträger (1) bei Erkennen (S2) eines Fehlerereignisses bis Rücksetzen (S7) und Neustarten (S8) des Datenträgers (1) blockiert wird (S6).

11. Verfahren nach einem der Ansprüche 1 bis 10, **dadurch gekennzeichnet, dass** das Fehlerereignis (S2) als Zufallsfehlerereignis gewertet wird (S5), wenn das zumindest eine zeitbasierte Angriffsfehlerkriterium (A, B) nicht erfüllt ist (S10, S4) und/oder zumindest ein prüfsummenbasiertes Zufallsfehlerkriterium erfüllt ist, welches zumindest einen Datenfehler in einem nicht-flüchtigen Speicherbereich (9) des Datenträgers (1) angibt.

12. Verfahren nach Anspruch 11, **dadurch gekennzeichnet, dass** geprüft wird (S5), ob der zumindest eine Datenfehler aus einem Speicherdefekt in dem nicht-flüchtigen Speicher (3) des Datenträgers (1) resultiert, und, wenn dies der Fall ist, Datenböcke in dem nicht-flüchtigen Speicherbereich (9), in welchen Datenfehler aufgetreten sind, in einen Ersatzspeicherbereich (10) ausgelagert werden.

13. Verfahren nach Anspruch 11 oder 12, **dadurch gekennzeichnet, dass** der zumindest eine Datenfehler im laufenden Betrieb (S1) oder durch Rücksetzen (S7) und Neustarten (S8) korrigiert wird und, wenn ein Speicherdefekt vorliegt und der Datenfehler nicht korrigiert werden kann, eine Fehlerbehandlung hinsichtlich des Speicherdefekts eingeleitet wird (S6, S17).

14. Verfahren nach einem der Ansprüche 11 bis 13, **dadurch gekennzeichnet, dass** bei Datenfehlern oder bei Speicherdefekten Fehlerstatusinformationen (12) zu den Datenfehlern oder Speicherdefekten in einem Statusspeicherbereich (11) des nicht-flüchtigen Speichers (3) des Datenträgers (1) abgelegt werden (S5), wobei die Fehlerstatusinformationen (12) zumindest Speicheradressen von Datenblöcken (9) umfassen, in welchen Datenfehler oder Speicherdefekte aufgetreten sind, vorzugsweise auch Auftrittszeiten und/ oder Auftrittsorte der Datenfehler oder Speicherdefekte.

15. Verfahren nach Anspruch 14, **dadurch gekennzeichnet, dass** an einen Nutzer des Datenträgers (1) eine Strahlungswarnung ausgegeben wird, wenn anhand der Fehlerstatusinformation (12) festgestellt wird (S11), dass
innerhalb einer vorgegebenen Zeitspanne eine Maximalzufallsfehlerzahl erreicht wurde und/ oder dass innerhalb der vorgegebenen Zeitspanne eine Anzahl an Zufallsfehlerereignissen zugenommen hat und/oder dass
an bestimmten Auftrittsorten und/oder zu bestimmten Auftrittszeiten eine Maximalzufallsfehlerzahl erreicht wurde und/oder dass
eine vorgegebene Anzahl von aufeinanderfolgendem Rücksetzen (S7) und Neustarten (S8) aufgrund eines Zufallsfehlerereignisses erreicht wurde.

16. Verfahren nach Anspruch 15, **dadurch gekennzeichnet, dass** die Strahlungswarnung über eine Kurzmitteilung und/ oder über eine Anzeigeeinrichtung eines Telekommunikationsendgeräts, mit welchem der Datenträger (1) in einer Datenkommunikationsverbindung steht, und/ oder mittels einer Nachricht an ein Hintergrundsystem ausgegeben wird.

17. Portabler Datenträger (1), umfassend zumindest einen Speicher (2,3,4), einen Prozessor (5) und eine Fehlerbehandlungseinheit (7) mit einem Fehlerzähler (14,15,11), wobei die Fehlerbehandlungseinheit (7) eingerichtet ist, ein Fehlerereignis in dem Datenträger (1) zu erkennen, das erkannte Fehlerereignis mittels des Fehlerzählers (14,15,11) zu registrieren und Schutzmaßnahmen abhängig von einem Zählerstand des Fehlerzählers (14,15,11) einzuleiten, wobei die Fehlerbehandlungseinheit (7) weiter eingerichtet ist, zu prüfen, ob das Fehlerereignis zumindest ein vorgegebenes zeitbasiertes Angriffsfehlerkriterium (A, B) erfüllt, und, falls dies der Fall ist, das Fehlerereignis mittels eines Angriffsfehlerzählers (14) als Angriffsfehlerereignis zu registrieren **dadurch gekennzeichnet, dass** die Fehlerbehandlungseinheit (7) weiter eingerichtet ist, das Fehlerereignis als Angriffsfehlerereignis zu registrieren, wenn ein Unterschreiten einer vorgegebenen Neustart-Zeitspanne (TR) festgestellt wird, welche die Zeitspanne zwischen dem letzten Neustarten des Datenträgers (1) und dem vorhergehenden Rücksetzen des Datenträgers (1) aufgrund des Fehlerereignisses angibt,
wobei die Fehlerbehandlungseinheit (7) das Unterschreiten der Neustart-Zeitspanne (TR) feststellt, wenn vor dem letzten Rücksetzen des Datenträgers (1) in einem flüchtigen Speicher (2) des Datenträgers (1) eingeschriebene Fehlererkennungsdaten (8) nach dem darauffolgenden Neustart des Datenträgers (1) zumindest teilweise noch im flüchtigen Speicher (2) vorhanden sind.

18. Datenträger (1) nach Anspruch 17, **dadurch gekennzeichnet, dass** der Datenträger (1) und die Fehlerbehandlungseinheit (7) eingerichtet sind, ein Verfahren nach einem der Ansprüche 1 bis 16 auszuführen.

## Claims

1. A method in a portable data carrier (1) for detecting attacks on the data carrier (1), comprising the steps of
- detecting (S2) an error event in the data carrier (1);
- registering (S15, S12, S5) the detected error event by means of an error counter (13, 14, 11); and
- initiating (S6, S17) protective measures in dependence on a counter reading of the error counter (13, 14, 11);
wherein the error event (S2) is registered (S15) as an attack error event by means of an attack error counter (14) only if the error event fulfills (S4, S11) at least one time-based attack error criterion (A, B),
**characterized in that** the error event (S2) is registered (S15) as an attack error event, if an undershooting of a predetermined restart timespan (TR) is detected (S11), which states the timespan between the last restart (S8) of the data carrier (1) and the preceding reset (S7) of the data carrier (1) due to the error event (S2),
wherein the undershooting of the restart timespan (TR) is detected (S11), if error detection data (8) written to a volatile memory (2) of the data carrier (1) prior to the last reset (S7) of the data carrier (1) are still present at least partially in the volatile memory (2) after the subsequent restart (S8) of the data carrier (1).

2. The method according to claim 1, **characterized in that** the error event (S2) is registered (S15) as an attack error event, if an undershooting of a predetermined error timespan is detected (S4), which states the timespan between the last restart (S8) of the data carrier (1) and the detected error event (S2).

3. The method according to claim 1 or 2, **characterized in that** the error event (S2) is registered (S15) as an attack error event, if the undershooting of the predetermined restart timespan (TR) and the undershooting of the predetermined error timespan are detected (S11, S4) consecutively or the undershooting of the predetermined error timespan and of the predetermined restart timespan (TR) are detected (S4, S11) consecutively.

4. The method according to claim 1 or 3, **characterized in that** upon detecting (S2) the error event, error detection data (8) are written (S3) to a volatile memory (2) of the data carrier (1).

5. The method according to claim 2 or 3 and claim 4, **characterized in that** error detection data (8) are written (S3) to the volatile memory (2), which state that upon detecting (S2) the error event an undershooting of the predetermined error timespan was detected (S4).

6. The method according to claim 2, 3 or 5, **characterized in that** the undershooting of the error timespan is detected (S4), if a counter reading of a command counter (13) stating a number of commands processed on the data carrier (1) since the last restart (S8) is below a predetermined maximum command number (TE) upon detecting (S2) the error event.

7. The method according to any of the claims 1 to 6, **characterized in that** the data carrier (1) is blocked (S 17) permanently, if an undershooting of the restart timespan (TR) and/or of the error timespan is detected (S10, S4) in a predetermined number of consecutive restarts (S8).

8. The method according to any of the claims 1 to 7, **characterized in that** the data carrier (1) is continued to be operated (S1) regularly after detecting (S10) an undershooting of the restart timespan (TR) and/or is blocked (S6) until the reset (S7) and restart (S8) after detecting (S4) an undershooting of the error timespan.

9. The method according to any of the claims 1 to 8, **characterized in that** the data carrier (1) is blocked (S17) permanently, if the attack error counter (14) reaches (S16) a predetermined maximum attack error number (TA).

10. The method according to any of the claims 1 to 9, **characterized in that** the data carrier (1) is blocked (S6) until the reset (S7) and restart (S8) of the data carrier (1) upon detecting (S2) an error event.

11. The method according to any of the claims 1 to 10, **characterized in that** the error event (S2) is rated (S5) as a random error event, if the at least one time-based attack error criterion (A, B) is not fulfilled (S10, S4) and/or at least one checksum-based random error criterion is fulfilled which states at least one data error in a non-volatile memory area (9) of the data carrier (1).

12. The method according to claim 11, **characterized in that** it is checked (S5) whether the at least one data error results from a memory defect in the non-volatile memory (3) of the data carrier (1) and, if this is the case, data blocks in the non-volatile memory area (9) in which data errors have occurred, are transferred to a replacement memory area (10).

13. The method according to claim 11 or 12, **characterized in that** the at least one data error is corrected during ongoing operation (S1) or by reset (S7) and restart (S8) and, if a memory defect is present and the data error cannot be corrected, an error treatment is initiated (S6, S17) with regard to the memory defect.

14. The method according to any of the claims 11 to 13, **characterized in that** in the event of data errors or memory defects error status information items (12) concerning the data errors or memory defects are stored (S5) in a status memory area (11) of the non-volatile memory (3) of the data carrier (1), wherein the error status information items (12) comprise at least memory addresses of data blocks (9) where data errors or memory defects have occurred, preferably also occurrence times and/or occurrence locations of the data errors or memory defects.

15. The method according to claim 14, **characterized in that** a radiation warning is output to a user of the data carrier (1), if it is detected (S11) on the basis of the error status information (12) that
a maximum random error number has been reached within a predetermined timespan and/or that a number of random error events has increased within the predetermined timespan and/or that
in certain occurrence locations and/or at certain occurrence times a maximum random error number has been reached and/or that
a predetermined number of consecutive resets (S7) and restarts (S8) due to a random error event has been reached.

16. The method according to claim 15, **characterized in that** the radiation warning is output via a short message and/or via a display device of a telecommunication terminal with which the data carrier (1) is in a data communication connection, and/or by means of a message to a background system.

17. A portable data carrier (1), comprising at least a memory (2, 3, 4), a processor (5) and an error treatment unit (7) having an error counter (14, 15, 11), wherein the error treatment unit (7) is adapted to detect an error event in the data carrier (1), register the detected error event by means of the error counter (14, 15, 11) and initiate protective measures in dependence on a counter reading of the error counter (14, 15, 11), wherein the error treatment unit (7) is further adapted to check whether the error event fulfills at least one predetermined time-based attack error criterion (A, B) and, if this is the case, register the error event as an attack error event by means of an attack error counter (14),
**characterized in that** the error treatment unit (7) is further adapted to register the error event as an attack error event, if an undershooting of a predetermined restart timespan (TR) is detected, which states the timespan between the last restart of the data carrier (1) and the preceding reset of the data carrier (1) due to the error event,
wherein the error treatment unit (7) detects the undershooting of the restart timespan (TR), if error detection data (8) written to a volatile memory (2) of the data carrier (1) prior to the last reset of the data carrier (1) are still present at least partially in the volatile memory (2) after the subsequent restart of the data carrier (1).

18. The data carrier (1) according to claim 17, **characterized in that** the data carrier (1) and the error treatment unit (7) are adapted to carry out a method according to any of the claims 1 to 16.

## Revendications

1. Procédé dans un support de données (1) portable, destiné à la détection d'attaques frappant le support de données (1), comprenant les étapes de
- la reconnaissance (S2) d'un événement erreur dans le support de données (1);
- l'enregistrement (S15, S12, S5), au moyen d'un compteur d'erreurs (13, 14, 11), de l'événement erreur reconnu; et de
- l'engagement (S6, S 17) de mesures de protection en fonction d'une valeur de compteur du compteur d'erreurs (13, 14, 11);
l'événement erreur (S2) n'étant enregistré (S15) au moyen d'un compteur d'erreurs par attaque (14) en tant qu'événement erreur par attaque que si l'événement erreur satisfait (S4, S11) au moins à un critère d'événement erreur par attaque (A, B) basé sur le temps,
**caractérisé en ce que** l'événement erreur (S2) est enregistré (S 15) en tant qu'événement erreur par attaque s'il est constaté (S11) un sous-dépassement d'une durée de redémarrage (TR) prédéterminée indiquant la durée entre le dernier redémarrage (S8) du support de données (1) et la réinitialisation (S7) précédente du support de données (1) en raison de l'événement erreur (S2), le sous-dépassement de la durée de redémarrage (TR) étant constaté (S11) si des données de reconnaissance d'erreur (8) écrites avant la dernière réinitialisation (S7) du support de données (1) dans une mémoire (2) volatile du support de données (1) existent au moins partiellement encore dans la mémoire (2) volatile après le redémarrage (S8) suivant du support de données (1).

2. Procédé selon la revendication 1, **caractérisé en ce que** l'événement erreur (S2) est enregistré (S 15) en tant qu'événement erreur par attaque s'il est constaté (S4) un sous-dépassement d'une durée d'erreur prédéterminée indiquant la durée entre le dernier redémarrage (S8) du support de données (1) et l'événement erreur (S2) reconnu.

3. Procédé selon la revendication 1 ou 2, **caractérisé en ce que** l'événement erreur (S2) est enregistré (S 15) en tant qu'événement erreur par attaque s'il est successivement constaté (S11, S4) le sous-dépassement de la durée de redémarrage (TR) prédéterminée et le sous-dépassement de la durée d'erreur prédéterminée ou s'il est successivement constaté (S4, S11) le sous-dépassement de la durée d'erreur prédéterminée et de la durée de redémarrage (TR) prédéterminée.

4. Procédé selon la revendication 1 ou 3 **caractérisé en ce que**, lors de la reconnaissance (S2) de l'événement erreur , des données de reconnaissance d'erreur (8) sont écrites (S3) dans une mémoire (2) volatile du support de données (1).

5. Procédé selon la revendication 2 ou 3 et la revendication 4, **caractérisé en ce que** des données de reconnaissance d'erreur (8) sont écrites (S3) dans la mémoire (2) volatile, lesquelles indiquent que, lors de la reconnaissance (S2) de l'événement erreur, un sous-dépassement de la durée d'erreur prédéterminée a été constaté (S4).

6. Procédé selon la revendication 2, 3 ou 5, **caractérisé en ce que** le sous-dépassement de la durée d'erreur est constaté (S4) si une valeur de compteur d'un compteur d'ordres (13) indiquant un nombre d'ordres déjà traités sur le support de données (1) depuis le dernier redémarrage (S8) se situe, lors de la reconnaissance (S2) de l'événement erreur , en-dessous d'un nombre maximum d'ordres (TE) prédéterminé.

7. Procédé selon une des revendications de 1 à 6, **caractérisé en ce que** le support de données (1) est bloqué (S 17) durablement si, pour un nombre prédéterminé de redémarrages (S8) consécutifs, un sous-dépassement de la durée de redémarrage (TR) et/ou de la durée d'erreur est constaté (S 10, S4).

8. Procédé selon une des revendications de 1 à 7, **caractérisé en ce que** le support de données (1) est, après reconnaissance (S10) d'un sous-dépassement de la durée de redémarrage (TR), subséquemment exploité (S1) normalement et/ou est, après reconnaissance (S4) d'un sous-dépassement de la durée d'erreur, bloqué (S6) jusqu'à la réinitialisation (S7) et au redémarrage (S8).

9. Procédé selon une des revendications de 1 à 8, **caractérisé en ce que** le support de données (1) est durablement bloqué (S 17) si le compteur d'erreurs par attaque (14) atteint (S 16) un nombre maximum d'erreurs par attaque (TA) prédéterminé.

10. Procédé selon une des revendications de 1 à 9, **caractérisé en ce que** le support de données (1) est, en cas de reconnaissance (S2) d'un événement erreur, bloqué (S6) jusqu'à la réinitialisation (S7) et au redémarrage (S8) du support de données (1).

11. Procédé selon une des revendications de 1 à 10, **caractérisé en ce que** l'événement erreur (S2) est considéré (S5) comme événement erreur aléatoire si le au moins un critère d'erreur par attaque (A, B) basé sur le temps n'est pas rempli (S10, S4) et/ou au moins un critère d'erreur aléatoire basé sur somme de contrôle et indiquant au moins une erreur de données dans une zone mémoire non volatile (9) du support de données (1) est rempli.

12. Procédé selon la revendication 11, **caractérisé en ce qu'**il est contrôlé (S5) si la au moins une erreur de données résulte d'une défectuosité de mémoire dans la mémoire non volatile (3) du support de données (1) et que, si cela est le cas, des blocs de données de la zone mémoire non volatile (9) dans lesquels des erreurs de données sont survenues sont transférés dans une zone mémoire de remplacement (10).

13. Procédé selon la revendication 11 ou 12, **caractérisé en ce que** la au moins une erreur de données est corrigée pendant le fonctionnement (S1) ou par réinitialisation (S7) et redémarrage (S8) et, s'il y a une défectuosité de mémoire et que l'erreur de données ne peut pas être corrigée, une gestion d'erreur relative à la défectuosité de mémoire est engagée (S6, S 17).

14. Procédé selon une des revendications de 11 à 13, **caractérisé en ce que**, en cas d'erreurs de données ou en cas de défectuosités de mémoire, des informations d'état d'erreur (12) concernant les erreurs de données ou les défectuosités de mémoire sont stockées (S5) dans une zone mémoire d'état (11) de la mémoire non volatile (3) du support de données (1), les informations d'état d'erreur (12) comprenant au moins des adresses mémoire de blocs de données (9) dans lesquels des erreurs de données ou des défectuosités de mémoire sont survenues, de préférence aussi des indications concernant les moments et les endroits auxquels sont survenues les erreurs de données ou les défectuosités de mémoire.

15. Procédé selon la revendication 14, **caractérisé en ce que**, à un utilisateur du support de données (1), il est donné un avertissement de rayonnement si, à l'aide de l'information d'état d'erreur (12), il est constaté (S11) que,
sur une durée prédéterminée, un nombre maximum d'erreurs aléatoires a été atteint et/ou que, sur la durée prédéterminée, un nombre d'événements erreur aléatoires a augmenté et/ou que,
à certains endroits de survenance et/ou à certains moments de survenance, un nombre maximum d'erreurs aléatoires a été atteint et/ou que
un nombre prédéterminé de réinitialisation (S7) et redémarrage (S8) consécutifs en raison d'un événement erreur aléatoire a été atteint.

16. Procédé selon la revendication 15, **caractérisé en ce que** l'avertissement de rayonnement est émis par le biais d'un message court et/ou par le biais d'un dispositif d'affichage d'un terminal de télécommunication avec lequel le support de données (1) est en liaison de communication de données, et/ou au moyen d'une annonce adressée à un un système d'arrière-plan.

17. Support de données (1) portable comprenant au moins une mémoire (2, 3, 4), un processeur (5) et une unité de traitement d'erreurs (7) ayant un compteur d'erreurs (14, 15, 11), l'unité de traitement d'erreurs (7) étant configurée pour reconnaître un événement erreur dans le support de données (1), enregistrer au moyen d'un compteur d'erreurs (14, 15, 11) l'événement erreur reconnu et engager des mesures de protection en fonction d'une valeur de compteur du compteur d'erreurs (14, 15, 11), l'unité de traitement d'erreurs (7) étant en outre configurée pour contrôler si l'événement erreur remplit au moins un critère d'erreur par attaque (A, B) prédéterminé basé sur le temps, et pour, si cela est le cas, enregistrer en tant qu'événement erreur par attaque l'événement erreur au moyen d'un compteur d'erreurs par attaque (14), **caractérisé en ce que** l'unité de traitement d'erreurs (7) est en outre configurée pour enregistrer en tant qu'événement erreur par attaque l'événement erreur s'il est constaté un sous-dépassement d'une durée de redémarrage (TR) prédéterminée indiquant la durée entre le dernier redémarrage du support de données (1) et la réinitialisation précédente du support de données (1) en raison de l'événement erreur,
l'unité de traitement d'erreurs (7) constatant le sous-dépassement de la durée de redémarrage (TR) si des données de reconnaissance d'erreur (8) écrites avant la dernière réinitialisation du support de données (1) dans une mémoire (2) volatile du support de données (1) existent au moins partiellement encore dans la mémoire (2) volatile après le redémarrage suivant du support de données (1).

18. Support de données (1) selon la revendication 17, **caractérisé en ce que** le support de données (1) et l'unité de traitement d'erreurs (7) sont configurés pour exécuter un procédé selon une des revendications de 1 à 16.
